(19) Europäisches Patentamt
European Patent Office
Office européen des brevets

(11) **EP 4 607 260 A1**

(12) **EUROPEAN PATENT APPLICATION**
published in accordance with Art. 153(4) EPC

(43) Date of publication:
**27.08.2025 Bulletin 2025/35**

(21) Application number: **22962382.2**

(22) Date of filing: **19.10.2022**

(51) International Patent Classification (IPC):
***G02B 15/14*** (2006.01)     ***G02B 13/18*** (2006.01)

(52) Cooperative Patent Classification (CPC):
**G02B 15/1425; G02B 13/18; G02B 15/14**

(86) International application number:
**PCT/CN2022/126283**

(87) International publication number:
**WO 2024/082192 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **OBIKANE, Yasuhiko**
**Tokyo 141--0031 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **ZOOM LENS AND PHOTOGRAPHING DEVICE**

(57) A zoom lens and a photographing device, which are overall small and relatively thin, and provide a wide angle, brightness, and high levels of performance. The zoom lens is provided, sequentially from an object side, with a first lens group (G1) having a negative refractive power, and a second lens group (G2) having a positive refractive power. When the zoom lens zooms from a wide-angle end to a long-focus end, the first lens group (G1) and the second lens group (G2) move along different trajectories to reduce the spacing therebetween, and satisfy the following conditional expression: $0.38 \leq OAL2/OALw \leq 0.80$, where OAL2 is the length of the second lens group (G2) from the object side to the axis of an image side, and OALw is the length of the first lens group (G1) at the wide-angle end from the object side to the axis of an image surface.

Fig. 1

EP 4 607 260 A1

## Description

### FIELD

The present disclosure relates to a zoom lens and a photographing device, which are small and thin as a whole and may photograph with a wide angle, a high brightness and a high performance.

### BACKGROUND

In a photographing device that needs to be thinned, especially a smart phone, there is a tendency to avoid carrying a zoom lens because it will increase a thickness of a product. For example, in some smart phones, a plurality of photographing units including monofocal lenses with different view angles are carried, and a pseudo zoom lens function is realized by digital zooming and switching of the photographing units according to a view angle at which a user wants to photograph.

On the other hand, in a telephoto zoom lens, a prism is arranged on an object side to bend an optical path, so that a thinned product may be achieved, even for an optical system with a long optical path length.

Documents in the related art

Patent documents

Patent document 1: Japanese patent publication No. 2014-232217
Patent document 2: Japanese patent publication No. 2016-170300

### SUMMARY

A problem to be solved by the present disclosure

A structure carrying a plurality of photographing units leads to an increase in a volume and a manufacturing cost of a product. In addition, when the photographing units are switched, sometimes the change of a field of view angle is discontinuous, which causes discomfort to a user. A structure of a zoom lens with a bent optical path needs to bend the optical path by about 90 degrees on an object side, so that it is difficult to realize a wide-angle zoom lens.

The present disclosure is made in order to solve this problem, and is intended to provide a zoom lens and a photographing device which are small and thin as a whole and may photograph with a wide angle, a high brightness and a high performance.

A solution to the problem

A zoom lens in a first embodiment of the present disclosure includes a first lens group with a negative refractive power and a second lens group with a positive refractive power in sequence from an object side. When zooming from a wide-angle end to a telephoto end, the first lens group and the second lens group move by different trajectories to reduce an interval therebetween, and a following conditional expression is satisfied.

$$0.38 \leq OAL2/OALw \leq 0.80 \ldots (1)$$

OAL2: an axial length of the second lens group from the object side to an image side.
OALw: an axial length of the first lens group at the wide-angle end from the object side to an image plane.

According to the first embodiment, the first lens group with the negative refractive power is arranged closest to the object side, and the second lens group with the positive refractive power is arranged on the image side. Therefore, a retro-focus optical power configuration is provided, and a wide-angle optimization may be realized by shortening a focal length at the wide-angle end.

Conditional expression (1) specifies a ratio of the axial length of the second lens group from the object side to the image side to the axial length of the first lens group from the object side to the image plane at the wide-angle end (a ratio of a total length of the second lens group to a total length at the wide-angle end). In a negative lead-type zoom lenses using the first lens group with the negative refractive power, the total length generally becomes the longest at the wide-angle end. When the zoom lens zooms, the focal length is changed by changing the interval of respective groups, while in a case that an air interval is increased, a movement amount of this part may be increased, and a magnification change ratio may be ensured, but resulting in a disadvantage that the total length at the wide-angle end becomes longer.

In the zoom lens of the first embodiment, both thinning and brightness (i.e., an F number is small) may be achieved by minimizing the air interval and increasing the total length of the second lens group. In a case that this value is lower than a lower limit, the total length of the second lens group becomes smaller and the number of lenses in the second lens group is reduced, so that an aberration correction becomes insufficient, and it is difficult to form a bright zoom lens. In addition, in a case that this value is higher than an upper limit, it is difficult to obtain a desired magnification change ratio because the air interval becomes smaller.

A zoom lens in a second embodiment of the present disclosure includes a first lens group with a negative refractive power and a second lens group with a positive refractive power in sequence from an object side. When zooming from a wide-angle end to a telephoto end, the first lens group and the second lens group move by different trajectories to reduce an interval therebetween, and a following conditional expression is satisfied.

$$-5.00 \leq f1/f2 \leq -1.30 \ldots (2)$$

f1: a focal length of the first lens group.
f2: a focal length of the second lens group.

According to the second embodiment, the first lens group with the negative refractive power is arranged closest to the object side, and the second lens group with the positive refractive power is arranged on an image side. Therefore, a retro-focus optical power configuration is provided, so that a wide-angle optimization may be realized by shortening a focal length at the wide-angle end.

Conditional expression (2) specifies a ratio of the focal length of the first lens group to the focal length of the second lens group. In the zoom lens having the first lens group with the negative refractive power and the second lens group with the positive refractive power in sequence from the object side, the first lens group and the second lens group change their intervals from an image plane for zooming. In order to ensure a magnification change ratio, it is necessary to enhance the optical power of each group and ensure an air interval to such an extent that each group may move effectively. However, in a negative lead-type zoom lenses, in a case that an optical power of the first lens group is to be enhanced, an outer diameter of the first lens group tends to become larger, so that a thickness of a peripheral part of a lens becomes obviously thicker, thus the first lens group itself becomes thicker, and a total length of the zoom lens cannot be avoided from becoming longer.

In the zoom lens of the second embodiment, in order to make the first lens group thinner, weaken the negative optical power, and achieve a smaller F number, the optical power of the second lens group is enhanced. In a case that this value is lower than a lower limit, the optical power of the first lens group becomes too weak, and it is difficult to obtain a desired magnification change ratio. In addition, in a case that this value is higher than an upper limit, the optical power of the first lens group is enhanced, but the first lens group itself becomes thicker, thus making it difficult to reduce the total length.

A zoom lens in a third embodiment of the present disclosure has a first lens group with a negative refractive power and a second lens group with a positive refractive power in sequence from an object side. When zooming from a wide-angle end to a telephoto end, the first lens group and the second lens group move by different trajectories to reduce an interval therebetween, and a following conditional expression is satisfied.

$$0.10 \leq f2/\sqrt{(fw \times ft)} \leq 0.90 \ldots (3)$$

f2: a focal length of the second lens group.
fw: a focal length at the wide-angle end.
ft: a focal length at the telephoto end.

According to the third embodiment, the first lens group with the negative refractive power is arranged closest to the object side, and the second lens group with the positive refractive power is arranged on an image side. Therefore, a retro-focus optical power configuration is provided, so that a wide-angle optimization may be realized by shortening the focal length at the wide-angle end.

Conditional expression (3) specifies a ratio of the focal length of the second lens group to an effective focal length of the zoom lens. In the zoom lens having the first lens group with the negative refractive power and the second lens group with the positive refractive power in sequence from the object side, it is difficult to form a bright optical system in a case that a positive optical power of the second lens group is weak.

In a case that this value is lower than a lower limit, the effective focal length serving as a denominator is large, so that it becomes difficult for the wide-angle optimization. In addition, in a case that this value is higher than an upper limit, the focal length of the second lens group is large and the optical power of the second lens group is weak, so that it is difficult to form a bright zoom lens.

A zoom lens in a fourth embodiment of the present disclosure has a first lens group with a negative refractive power and a second lens group with a positive refractive power in sequence from an object side. When zooming from a wide-angle end to a telephoto end, the first lens group and the second lens group move by different trajectories to reduce an interval therebetween, and a following conditional expression is satisfied.

$$-10.00 \leq L1R1/L1R2 \leq 0.90 \dots (4)$$

L1R1: a radius of curvature of an object-side surface of a lens closest to the object side.
L1R2: a radius of curvature of an image-side surface of the lens closest to the object side.

According to the fourth embodiment, the first lens group with the negative refractive power is arranged closest to the object side, and the second lens group with the positive refractive power is arranged on the image side. Therefore, a retro-focus optical power configuration is provided, so that a wide-angle optimization may be realized by shortening a focal length at the wide-angle end.

Conditional expression (4) specifies a ratio of the radius of curvature of the object-side surface of the lens closest to the object side to the radius of curvature of the image-side surface of the lens closest to the object side. In a case that the lens closest to the object side of a wide-angle lens is a spherical lens, a negative meniscus lens protruding toward the object side is generally arranged. This is because, for a light beam incident at a large angle with respect to an optical axis, in a case that an angle of a peripheral part with respect to a plane normal becomes larger, not only an aberration correction becomes difficult, but also a reflectivity becomes higher, thus the wide-angle lens is not preferred. Therefore, the angle of the peripheral part with respect to the plane normal is mostly designed to be smaller, that is, in a case that the lens is the spherical lens, it is designed to configure the lens closest to the object side as the negative meniscus lens that protrudes toward the object side. However, in order to realize a bright lens system with a short total length, for an axial light beam, the object-side surface of the lens closest to the object side is preferably concave toward the object side, and when viewed only from the radius of curvature on the axis, the lens closest to the object side is preferably a negative meniscus lens or a biconcave lens concave toward the object side.

In a case that this value is lower than a lower limit, a negative optical power of the object-side surface of the lens closest to the object side becomes weak, and an aberration correction such as a spherical aberration of the axial light beam becomes insufficient, thus making it difficult to form a bright zoom lens. In addition, in a case that this value is higher than an upper limit, the negative optical power on the axis becomes weak, so that a negative focal length becomes weak, the focal length cannot be shortened, and it is difficult to realize the wide-angle optimization.

A zoom lens in a fifth embodiment of the present disclosure is the zoom lens in any of the first to fourth embodiments, and when zooming, a first lens group moves to be closest to an image side at a telephoto end.

According to the fifth embodiment, a first lens group with a negative refractive power and a second lens group with a positive refractive power are arranged in sequence from an object side, and when zooming from a wide-angle end to the telephoto end, the first lens group and the second lens group move by different trajectories to reduce an interval therebetween. In a case that the first lens group is a negative zoom lens with a negative refractive power, when a magnification change ratio becomes larger, the moving trajectory of the first lens group sometimes is a moving trajectory concave toward the object side, but in a process that the first lens group and the second lens group move to reduce the interval, when the first lens group moves toward the object side, the second lens group usually also moves toward the object side. In the negative zoom lens, an aperture is usually arranged in the second lens group or in front of or behind the second lens group, and the second lens group moves toward the object side, in which the farther away from an image plane, the larger an F number is.

In the zoom lens of the fifth embodiment, as a wide-angle, bright and high-performance zoom lens, when zooming, the first lens group moves to be closest to the image side at the telephoto end, so that even at the telephoto end, photographing may be performed with a smaller F number, and the second lens group does not move toward the object side too much.

A zoom lens in a sixth embodiment of the present disclosure is the zoom lens in any of the first to fourth embodiments, and a following conditional expression is satisfied.

$$1.20 \leq OALw/\sqrt{(fw \times ft)} \leq 3.00 \dots (5)$$

OALw: an axial length of a first lens group at a wide-angle end from an object side to an image plane.
fw: a focal length at the wide-angle end.
ft: a focal length at a telephoto end.

Conditional expression (5) specifies a ratio of the axial length of the first lens group at the wide-angle end from the object side to the image plane to an effective focal length of the zoom lens. In a negative zoom lens using the first lens group with the negative refractive power, a total length generally becomes the longest at the wide-angle end. When the zoom lens zooms, the focal length is changed by changing the interval of respective groups, while in a case that an air interval is increased, a movement amount of this part may be increased, and a magnification change ratio may be ensured, but resulting in a disadvantage that the total length at the wide-angle end becomes longer. In a case that the full length at the wide-angle end becomes longer, a mechanical structure becomes complicated and the number of parts increases when constructing a telescopic lens, so that it is not preferable. In the zoom lens of the sixth embodiment, a small and thin zoom lens may be provided by minimizing the air interval and keeping the axial length of the first lens group at the wide-angle end from the object side to the image plane short.

In a case that this value is lower than a lower limit, the axial length of the first lens group at the wide-angle end from the object side to the image plane is too short, and it is difficult to ensure the desired magnification change ratio. In addition, in a case that this value is higher than an upper limit, the total length at the wide-angle end becomes longer, and the mechanical structure becomes complicated and the number of parts increases when constructing the telescopic lens, so that miniaturization becomes difficult.

A zoom lens according to a seventh embodiment of the present disclosure is the zoom lens in any of the first to fourth embodiments, and a following conditional expression is satisfied.

$$-2.00 \leq m1/m2 \leq -0.20 \ldots (6)$$

m1: a movement amount of a first lens group toward an object side when zooming from a wide-angle end to a telephoto end.
m2: a movement amount of a second lens group toward the object side when zooming from the wide-angle end to the telephoto end.

Conditional expression (6) specifies a ratio of the movement amount of the first lens group toward the object side when zooming from the wide-angle end to the telephoto end to the movement amount of the second lens group toward the object side when zooming from the wide-angle end to the telephoto end. In a negative zoom lens having a first lens group with a negative refractive power and a second lens group with a positive refractive power, in which the first lens group and the second lens group move by different trajectories to reduce an interval therebetween when zooming from the wide-angle end to the telephoto end, in a case that the movement amount of the first lens group is large, a mechanical structure becomes complicated and the number of parts increases when constructing a telescopic lens, so that miniaturization becomes difficult. In addition, in a case that the movement amount of the second lens group is large, an aperture is usually arranged in the second lens group or in front of or behind the second lens group, and the second lens group moves toward the object side, in which the farther away from an image plane, the larger an F number is. Therefore, in the zoom lens of the seventh embodiment, the optimum conditions are determined.

In a case that this value is lower than a lower limit, the movement amount of the first lens group toward the object side becomes too large when zooming from the wide-angle end to the telephoto end, and the mechanical structure becomes complicated and the number of parts increases, so that miniaturization becomes difficult. In addition, in a case that this value is higher than an upper limit, the movement amount of the second lens group toward the object side becomes too large when zooming from the wide-angle end to the telephoto end, and it becomes difficult to construct a bright zoom lens at the telephoto end in particular.

A zoom lens in an eighth embodiment of the present disclosure is the zoom lens in any of the first to fourth embodiments. In a state where no photographing is performed, a first lens group is moved to be closer to an image side than a telephoto end, and is stored.

The zoom lens of the eighth embodiment of the present disclosure is made to be applied to a zoom lens and a photographing device which are small and thin as a whole and may photograph with a wide angle, a high brightness and a high performance, and its greatest effect is to adopt a telescopic structure when not in use. In a negative zoom lens, as a trajectory of the first lens group moving from a wide-angle end to a telephoto end, it includes a case of simply moving toward an object side and a case of moving with a curve concave toward the object side. In a case that the telescopic structure is adopted when not in use, the first lens group may be moved to be closer to the image side than a position of the telephoto end, so that the thickness of the lens and the thickness of the product may be reduced when stored.

A zoom lens in a ninth embodiment of the present disclosure is a zoom lens in any of the first to fourth embodiments, and a following conditional expression is satisfied.

$$0.50 \leq (OALt-m2)/\sqrt{(fw \times ft)} \leq 5.00 \ldots (7)$$

OALt: an axial length of a first lens group at a telephoto end from an object side to an image plane.
m2: a movement amount of a second lens group toward the object side when zooming from a wide-angle end to the telephoto end.
fw: a focal length at the wide-angle end.
ft: a focal length at the telephoto end.

Conditional expression (7) specifies a ratio of a length obtained by subtracting the axial length of the first lens group at the telephoto end from the object side to the image plane from the movement amount of the second lens group toward the object side when zooming from the wide-angle end to the telephoto end to an effective focal length of the zoom lens. The zoom lens in the ninth embodiment is made to be applied to a zoom lens and a photographing device which are small and thin as a whole and may photograph with a wide angle, a high brightness and a high performance, and its greatest effect is to adopt a telescopic structure when not in use. In a negative zoom lens, the first lens group and the second lens group are closest to each other at the telephoto end, and an interval between them becomes the smallest. In this case, the second lens group moves toward the object side. In a case that the interval between the first lens group and the second lens group at the telephoto end is maintained, by reducing an interval between the image plane and the second lens group at the wide-angle end, the thickness of the lens and the thickness of the product may be reasonably reduced when stored.

In a case that this value is lower than a lower limit, the thickness of each group becomes too thin, so that an aberration correction of each group becomes insufficient, and it is difficult to form a bright and high-performance zoom lens. In addition, in a case that this value is higher than an upper limit, it is difficult to reduce the thickness of the lens and the thickness of the product when stored.

A zoom lens in a tenth embodiment of the present disclosure is the zoom lens in any of the first to fourth embodiments, and has a field of view angle in a range of 122~63.4°, that is, the field of view angle is in a range of 122~63.4° from a wide-angle end to a telephoto end.

A zoom lens in an eleventh embodiment of the present disclosure is the zoom lens in any of the first to fourth embodiments, and further has an image sensor, and a photosensitive element in the image sensor has a size in a range of 1 inch~1/2 inch.

A zoom lens in a twelfth embodiment of the present disclosure is the zoom lens in any of the first to fourth embodiments, and an equivalent focal length of the zoom lens is in a range of 12mm~35mm.

A zoom lens in a thirteenth embodiment of the present disclosure is the zoom lens in any of the first to fourth embodiments, and a minimum focusing distance of the zoom lens is 10cm.

A photographing device in a fourteenth embodiment of the present disclosure includes the zoom lens in any of the first to fourth embodiments, and a photographing element that converts a formed optical image into an electrical signal.

Inventive effect

According to the present disclosure, it is possible to provide a zoom lens and a photographing device which are small and thin as a whole and may photograph with a wide angle, a high brightness and a high performance.

**BRIEF DESCRIPTION OF THE DRAWINGS**

Fig. 1 (A) is a view showing a wide-angle end state of a zoom lens according to a first embodiment, Fig. 1 (B) is a view showing an intermediate focus position state, Fig. 1 (C) is a lens layout view showing a telephoto end state, and Fig. 1 (D) is a diagram showing a change of a first lens group and a second lens group from the wide-angle end state to the telephoto end state.
Fig. 2 is a longitudinal aberration diagram of the wide-angle end state of the first embodiment.
Fig. 3 is a longitudinal aberration diagram of the intermediate focus position state of the first embodiment.
Fig. 4 is a longitudinal aberration diagram of the telephoto end state of the first embodiment.
Fig. 5 (A) is a view showing a wide-angle end state of a zoom lens according to a second embodiment, Fig. 5 (B) is a view showing an intermediate focus position state, Fig. 5 (C) is a lens layout view showing a telephoto end state, and Fig. 5 (D) is a diagram showing a change of a first lens group and a second lens group from the wide-angle end state to the telephoto end state.

Fig. 6 is a longitudinal aberration diagram of the wide-angle end state of the second embodiment.

Fig. 7 is a longitudinal aberration diagram of the intermediate focus position state of the second embodiment.

Fig. 8 is a longitudinal aberration diagram of the telephoto end state of the second embodiment.

Fig. 9 (A) is a view showing a wide-angle end state of a zoom lens according to a third embodiment, Fig. 9 (B) is a view showing an intermediate focus position state, Fig. 9 (C) is a lens layout view showing a telephoto end state, and Fig. 9 (D) is a diagram showing a change of a first lens group and a second lens group from the wide-angle end state to the telephoto end state.

Fig. 10 is a longitudinal aberration diagram of the wide-angle end state of the third embodiment.

Fig. 11 is a longitudinal aberration diagram of the intermediate focus position state of the third embodiment.

Fig. 12 is a longitudinal aberration diagram of the telephoto end state of the third embodiment.

Fig. 13 (A) is a view showing a wide-angle end state of a zoom lens according to a fourth embodiment, Fig. 13 (B) is a view showing an intermediate focus position state, Fig. 13 (C) is a lens layout view showing a telephoto end state, and Fig. 13 (D) is a diagram showing a change of a first lens group and a second lens group from the wide-angle end state to the telephoto end state.

Fig. 14 is a longitudinal aberration diagram of the wide-angle end state of the fourth embodiment.

Fig. 15 is a longitudinal aberration diagram of the intermediate focus position state of the fourth embodiment.

Fig. 16 is a longitudinal aberration diagram of the telephoto end state of the fourth embodiment.

Fig. 17 (A) is a view showing a wide-angle end state of a zoom lens according to a fifth embodiment, Fig. 17 (B) is a view showing an intermediate focus position state, Fig. 17 (C) is a lens layout view showing a telephoto end state, and Fig. 17 (D) is a diagram showing a change of a first lens group and a second lens group from the wide-angle end state to the telephoto end state.

Fig. 18 is a longitudinal aberration diagram of the wide-angle end state of the fifth embodiment.

Fig. 19 is a longitudinal aberration diagram of the intermediate focus position state of the fifth embodiment.

Fig. 20 is a longitudinal aberration diagram of the telephoto end state of the fifth embodiment.

Fig. 21 (A) is a view showing a wide-angle end state of a zoom lens according to a sixth embodiment, Fig. 21 (B) is a view showing an intermediate focus position state, Fig. 21 (C) is a lens layout view showing a telephoto end state, and Fig. 21 (D) is a diagram showing a change of a first lens group and a second lens group from the wide-angle end state to the telephoto end state.

Fig. 22 is a longitudinal aberration diagram of the wide-angle end state of the sixth embodiment.

Fig. 23 is a longitudinal aberration diagram of the intermediate focus position state of the sixth embodiment.

Fig. 24 is a longitudinal aberration diagram of the telephoto end state of the sixth embodiment.

Fig. 25 (A) is a view showing a wide-angle end state of a zoom lens according to a seventh embodiment, Fig. 25 (B) is a view showing an intermediate focus position state, Fig. 25 (C) is a lens layout view showing a telephoto end state, and Fig. 25 (D) is a diagram showing a change of a first lens group and a second lens group from the wide-angle end state to the telephoto end state.

Fig. 26 is a longitudinal aberration diagram of the wide-angle end state of the seventh embodiment.

Fig. 27 is a longitudinal aberration diagram of the intermediate focus position state of the seventh embodiment.

Fig. 28 is a longitudinal aberration diagram of the telephoto end state of the seventh embodiment.

Fig. 29 (A) is a view showing a wide-angle end state of a zoom lens according to an eighth embodiment, Fig. 29 (B) is a view showing an intermediate focus position state, Fig. 29 (C) is a lens layout view showing a telephoto end state, and Fig. 29 (D) is a diagram showing a change of a first lens group and a second lens group from the wide-angle end state to the telephoto end state.

Fig. 30 is a longitudinal aberration diagram of the wide-angle end state of the eighth embodiment.

Fig. 31 is a longitudinal aberration diagram of the intermediate focus position state of the eighth embodiment.

Fig. 32 is a longitudinal aberration diagram of the telephoto end state of the eighth embodiment.

Fig. 33 (A) is a view showing a wide-angle end state of a zoom lens according to a ninth embodiment, Fig. 33 (B) is a view showing an intermediate focus position state, Fig. 33 (C) is a lens layout view showing a telephoto end state, and Fig. 33 (D) is a diagram showing a change of a first lens group and a second lens group from the wide-angle end state to the telephoto end state.

Fig. 34 is a longitudinal aberration diagram of the wide-angle end state of the ninth embodiment.

Fig. 35 is a longitudinal aberration diagram of the intermediate focus position state of the ninth embodiment.

Fig. 36 is a longitudinal aberration diagram of the telephoto end state of the ninth embodiment.

Fig. 37 (A) is a view showing a wide-angle end state of a zoom lens according to a tenth embodiment, Fig. 37 (B) is a view showing an intermediate focus position state, Fig. 37 (C) is a lens layout view showing a telephoto end state, and Fig. 37 (D) is a diagram showing a change of a first lens group and a second lens group from the wide-angle end state to the telephoto end state.

Fig. 38 is a longitudinal aberration diagram of the wide-angle end state of the tenth embodiment.

Fig. 39 is a longitudinal aberration diagram of the intermediate focus position state of the tenth embodiment.

Fig. 40 is a longitudinal aberration diagram of the telephoto end state of the tenth embodiment.

Fig. 41 (A) is a view showing a lens barrel in a wide-angle end state, Fig. 41 (B) is a view showing the lens barrel in a telephoto end state, and Fig. 41 (C) is a view showing the lens barrel in a storage state.

Fig. 42 is a schematic view showing a structure of a photographing device.

## DETAILED DESCRIPTION

An embodiment of the present disclosure will be described below with reference to the accompanying drawings.

Hereinafter, a zoom lens and a photographing device having the zoom lens of the present disclosure will be described through embodiments of the present disclosure using tables and drawings. In the following tables, r shown represents a radius of curvature, d represents a lens thickness or a lens interval, nd represents a refractive index of a d line, and vd represents a dispersion coefficient based on the d line (with a wavelength of 587.5620nm). In addition, a surface number indicates an order of an optical surface from an object side along an advancing direction of light. In addition, "∞" of the radius of curvature indicates a plane or an opening, and the refractive index of air "1.000000" is omitted. When the optical surface is an aspheric surface, the opposite surface number is marked with *, and a paraxial curvature radius is indicated in a column of the radius of curvature r. In addition, the unit of "mm" is used for length unless otherwise specified, but an optical system may obtain the same optical performance even if it is enlarged or reduced, so that the present disclosure is not limited to this.

In addition, when c represents a curvature, k represents a conic coefficient, A4, A6, A8, A10 ... represent aspheric coefficients of respective orders, and z represents a displacement in a direction of an optical axis at a position with a height h from the optical axis based on a surface vertex, an aspheric shape is defined by a following formula.

$$z=ch^2/[1+\{1-(1+k)c^2h^2\}^{1/2}]+A4h^4+A6h^6+A8h^8+A10h^{10} \ldots$$

In addition, each longitudinal aberration diagram shows a spherical aberration (SA (mm)), an astigmatism (AST (mm)) and a distortion aberration (DIS (%)) in sequence from the left. In the spherical aberration diagram, a vertical axis represents an F number (denoted by FNO in the diagram), a solid line represents characteristics of the d line (d-line), a short dashed line represents characteristics of an F line (F-line), and a long dashed line represents characteristics of a C line (C-line). In the astigmatism diagram, a vertical axis represents a field of view angle (represented by W in the diagram), a solid line represents characteristics of a sagittal plane (represented by S in the diagram), and a dashed line represents characteristics of a meridian plane (represented by M in the diagram). In the distortion aberration diagram, a vertical axis represents a field of view angle (denoted by W in the diagram). It may be understood that the F number referred to in the present disclosure is a numerical value for indicating a size of an aperture, for example, f/1.8, f/4.0, f/16, etc. With the same focal length, the smaller the F number, the greater the light input and the larger the aperture, and the brighter it is.

In addition, an equivalent focal length refers to converting focal lengths of different lenses into equivalent focal lengths of a standard camera according to a certain proportional coefficient, in which the standard camera may be a full-frame camera. The method of converting the focal lengths of different lenses into the equivalent focal lengths of the standard camera may be found in the related art and will not be described here. A minimum focusing distance of the lens refers to a minimum distance between a photographed object and an image sensor when the lens is in focus, that is, a distance between a nearest object that the lens may photograph in focus and the image sensor.

(First embodiment)

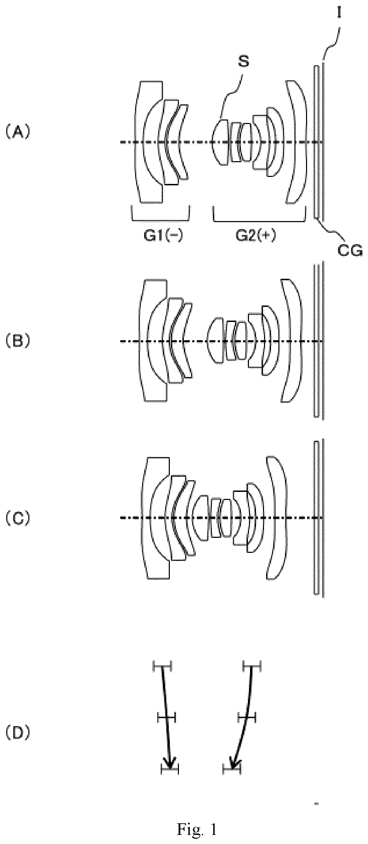

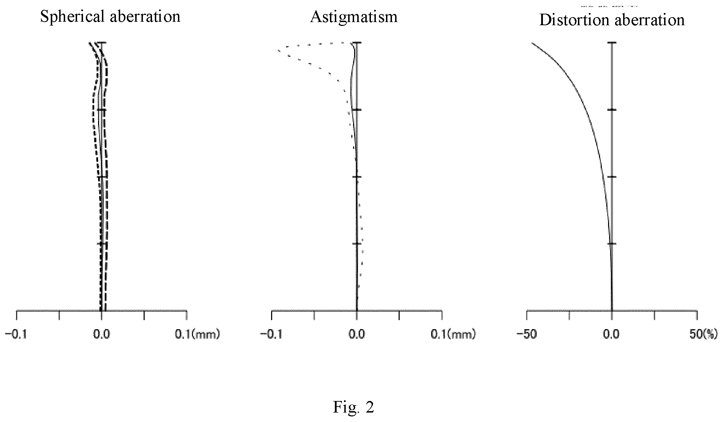

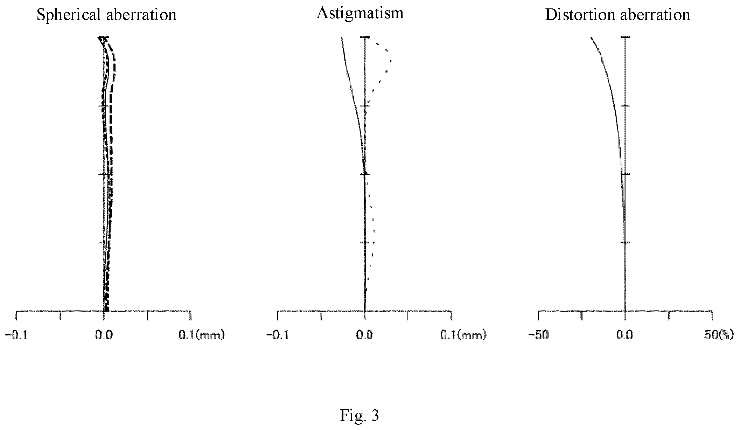

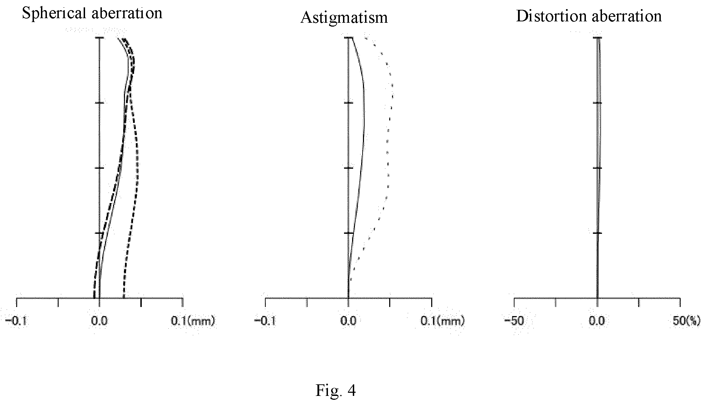

Fig. 1 is a lens layout view showing a wide-angle end state (Fig. 1 (A)), an intermediate focus position state (Fig. 1 (B)) and a telephoto end state (Fig. 1 (C)) of a zoom lens according to an embodiment (first embodiment) of this implementation, and a diagram showing a change of a first lens group G1 and a second lens group G2 from the wide-angle end state to the telephoto end state (Fig. 1 (D)). Fig. 2 is a longitudinal aberration diagram of the wide-angle end state of the first embodiment. Fig. 3 is a longitudinal aberration diagram of the intermediate focus position state of the first embodiment. Fig. 4 is a longitudinal aberration diagram of the telephoto end state of the first embodiment.

The zoom lens of the first embodiment has the first lens group G1 with a negative refractive power and the second lens group G2 with a positive refractive power, and an aperture stop S for adjusting a light quantity is arranged between the first lens group G1 and the second lens group G2. In addition, an optical filter CG including an infrared cut-off filter or the like is arranged between the second lens group G2 and an imaging position I.

In the first embodiment with the above configuration, in a process of zooming from the wide-angle end state to the telephoto end state, the first lens group G1 gradually moves toward an image side and the second lens group G2 gradually moves toward an object side. That is, the first lens group G1 and the second lens group G2 move by different trajectories to reduce an interval therebetween. The aperture stop S moves integrally with the second lens group G2.

In the following, values of parameters of the first embodiment are shown.

(Table 1) Surface data

(Table 1) Surface data

| Surface number | r | d | nd | vd | |
|---|---|---|---|---|---|
| 1* | -18.782 | 0.400 | 1.6161 | 25.78 | |
| 2* | 4.629 | 0.761 | | | |
| 3* | 3.013 | 0.350 | 1.5445 | 55.97 | |
| 4* | 2.04:8 | 0.100 | | | |
| 5* | 2.061 | 0.615 | 1.6714 | 19.27 | |
| 6* | 2.441 | d6 | | | |
| 7* | 1.655 | 0.823 | 1.5445 | 55.97 | (Aperture stop |
| 8* | -9.996 | 0.100 | | | |
| 9* | 4.857 | 0.350 | 1.6714 | 19.27 | |
| 10* | 2.136 | 0.122 | | | |
| 11* | 2.264 | 0.585 | 1.5445 | 55.97 | |
| 12* | -17.358 | 0.477 | | | |
| 13* | -1.633 | 0.450 | 1.5731 | 37.65 | |
| 14* | -2.761 | 0.301 | | | |
| 15* | -4.273 | 0.400 | 1.5445 | 55.97 | |
| 16* | -13.570 | 0.566 | | | |
| 17* | 237.703 | 0.553 | 1..5445 | 55.97 | |
| 18* | 11.592 | d18 | | | |
| 19 | ∞ | 0.210 | 1.5168 | 64.17 | |
| 20 | ∞ | 0.240 | | | |
| * represents aspheric surface | | | | | |

(Table 2) Aspheric data (in which an aspheric coefficient not shown is 0.00)

(Table 2) Aspheric data (in which the aspheric coefficient not shown is 0.00)

| Surface number | k | A4 | A6 | A8 | A10 | A12 | A14 | A16 | A18 | A20 |
|---|---|---|---|---|---|---|---|---|---|---|
| 1 | -4.4610E+00 | 1.5289E-02 | -8.6882E-04 | -5.3772E-05 | 4.3309E-06 | -8.0601E-09 | 8.3162E-12 | 84921E-21 | -1.0213E-22 | -4.1294E-24 |
| 2 | -7.0062E-01 | 5.4184E-03 | 4.9257E-03 | -4.592SE-04 | 1.5555E-05 | -1.2482E-17 | -2.7161E-19 | -5.8992E-21 | -1.6309E-22 | -4.1388E-24 |
| 3 | -2.7988E+00 | -1.3822E-02 | -2.4831E-03 | 8.0378E-04 | -6.9709E-05 | -2.1562E-08 | 6.0794E-10 | 4.4202E-12 | -1.915E-12 | -2.2924E-18 |
| 4 | -9.5791E-01 | 1.1885E-02 | -4.9879E-03 | -1.6917E-03 | 2.5399E-04 | -4.2717E-07 | 9.1007E-09 | -1.2654E-14 | -1.7593E-16 | -2.568BE-18 |
| 5 | -1.4353E+00 | -4.9559E-04 | 2.9223E-03 | -1.2407E-03 | -6.7728E-05 | -2.3000E-06 | 9.6443E-08 | -2.4809E-14 | -4,0689E-16 | -6,5066E-18 |
| 6 | -2.5521E+00 | -2.0202E-02 | 3.0270E-03 | 7.1789E-04 | -3.2260E-04 | 7.3364E-01 | -1.5482E-08 | -2.6841E-14 | -4.1038E-18 | -6.5118BE-18 |
| 7 | -1.4213E-01 | -1.0732E-03 | 1.0575E-05 | -2.4319E-04 | 6.6013E-04 | -3.6804E-04 | 5.1918E-05 | -2.6169E-14 | -4.0837E-16 | -6.5116E-18 |
| 8 | 4.8735E+00 | 2.0198E-02 | -1.129BE-02 | 7.8437E-03 | -3.4054E-03 | 2.6694E-04 | -2.0550E-05 | -5.9861E-21 | -1.5952E-22 | -4.1435E-24 |
| 9 | -5.0000E+00 | -3.1727E-02 | -3.8438E-04 | 7.8967E-03 | -6.8079E-03 | 9.4012E-04 | -1.0350E-04 | -2.6246E-14 | -4.0952E-16 | -6.5116E-18 |
| 10 | 2.4163E+00 | -7.1273E-02 | -4.4610E-03 | 1.3112E-02 | -8.8640E-03 | 1.9947E-03 | -2.1569E-04 | -2.6074E-14 | -4.0952E-16 | -6.5116E-18 |
| 11 | 1.4774E+00 | -1.4037E-02 | -1.4632E-02 | 4.4186E-03 | 4.9783E-04 | -5.1325E-05 | 2.0482E-06 | -6.2971E-15 | -8.100E-17 | -1.0645E-18 |
| 12 | 4.0106E+00 | -1.7858E-02 | -2.6860E-02 | -9.0087E-03 | -8.3009E-03 | 1.3625E-05 | -2.3291E-06 | -6.1808E-15 | -8.1004E-17 | -1.0645E-18 |
| 13 | -1.4744E+00 | -2.9008E-02 | -2.825SE-02 | -2.2292E-02 | -2.2424E-02 | 1.3716E-16 | 1.7767E-18 | 2.1739E-20 | 2.2613E-22 | 1.2175E-24 |
| 14 | -4.9979E+00 | 3.6536E-02 | 1.4616E-02 | -3.6927E-03 | -5.2687E-05 | 1.4103E-16 | 1.7729E-18 | 2.1810E-20 | 2.2614E-22 | 1.2175E-24 |
| 15 | 4.7724E+00 | -4.8053E-02 | -5.8360E-04 | 2.1002E-03 | -1.5234E-03 | -1.0814E-17 | 7.4434E-20 | 1.1064E-21 | 1.9984E-23 | 2.1812E-25 |
| 16 | 5.0000E+00 | -4.5011E-02 | 2.9737E-03 | -5.1154.E-04 | -2.1604E-04 | 1.6600E-17 | 1.1792E-19 | 1.3654E-21 | 1.6320E-23 | 2.7930E-25 |
| 17 | 5.0000E+00 | -1.3257E-02 | -1.6995E-04 | 2.4324E-04 | -1.4775E-05 | 6.4226E-08 | -1.9612E-09 | -3.1229E-14 | -3.8288E-16 | -6.5283E-18 |
| 18 | -5.0000E+00 | -1.5284E-02 | 6.9626E-04 | 2.3697E-05 | -5.5290E-06 | 8.9271E-08 | -3.3752E-10 | -2.9297E-10 | -4.8920E-16 | -6.7845E-18 |

(Table 3) Various data (zoom ratio 1.555, image height 4.000)

| (Table 3) Various data | | | |
|---|---|---|---|
| | Wide-angle | Intermediate | Telephoto |
| Focal length | 3.544 | 4.034 | 5.510 |
| F number | 2.400 | 2.591 | 3.168 |
| Half field of view | 64.905 | 50.984 | 35.541 |
| Total length of lens | 9.500 | 9.286 | 9.147 |
| d6 | 1.666 | 1.201 | 0.300 |
| d18 | 0.431 | 0.682 | 1.444 |

(Table 4) Data of zoom lens groups

(Table 4) Data of zoom lens groups

| Group | Initial surface | Focal length | Configuration length of lens | Movement amount of lens |
|---|---|---|---|---|
| 1 | 1 | -5.228 | 2.226 | -0.353 |
| 2 | 7 | 2.596 | 4.727 | 1.013 |

(Table 5) Magnifications of zoom lens groups

| Group | Initial surface | Wide-angle | Intermediate | Telephoto |
|---|---|---|---|---|
| 1 | f | 0.000 | 0.000 | 0.000 |
| 2 | 7 | -0.678 | -0.772 | -1.054 |

(Second embodiment)

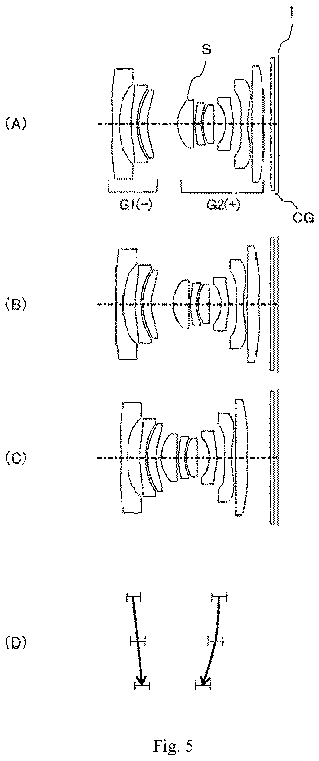

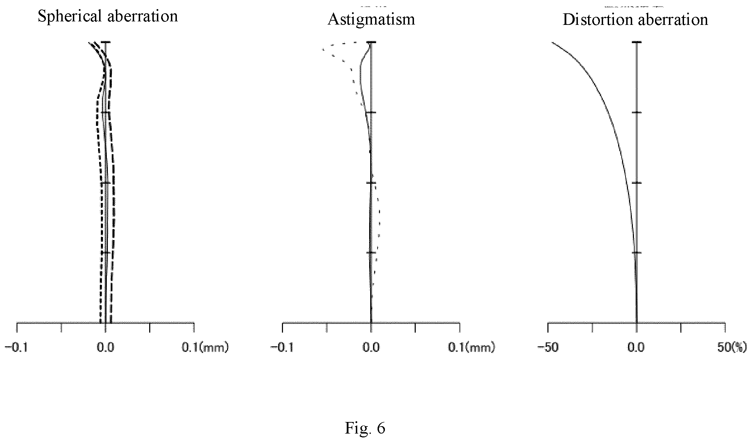

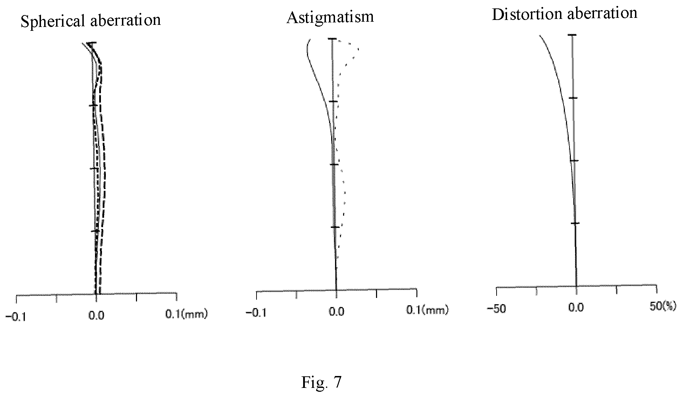

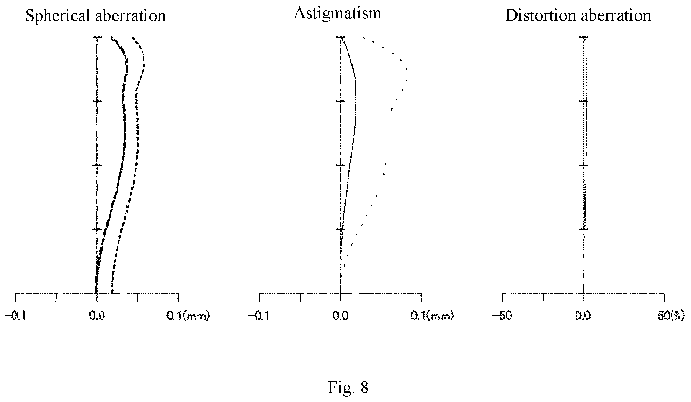

Fig. 5 is a lens layout view showing a wide- ingle end state (Fig. 5 (A)), an intermediate focus position state (Fig. 5 (B)) and a telephoto end state (Fig. 5 (C)) of a zoom lens according to an embodiment (second embodiment) of this implementation, and a diagram showing a change of first lens group G1 and a second lens group G2 from the wide-angle end state to the telephoto end state (Fig. 5 (D) . Fig. 6 is a longitudinal aberration diagram of the wide-angle end state of the second embodiment. Fig. 7 is a longitudinal aberration diagram of the intermediate focus position state of the second embodiment. Fig. 8 is a longitudinal aberration diagram of the telephoto end state of the second embodiment.

The zoom lens of the second embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.

In the second embodiment with the above configuration, in a process of zooming from the wide-angle end state to the telephoto end state, the first lens group G1 gradually moves toward in image side and the second lens group G2 gradually moves toward in object side. That is, the first lens group G1 and the second lens group G2 move by different trajectories to reduce an interval therebetween The aperture stop S moves integrally with the second lens group G2.

In the following, values of parameters of the second embodiment are shown.

(Table 6) Surface data

(Table 6) Surface data

| Surface number | r | d | nd | vd | |
|---|---|---|---|---|---|
| 1* | -15.048 | 0.400 | 1.5445 | 55.97 | |

(continued)

| Surface number | r | d | nd | vd | |
|---|---|---|---|---|---|
| 2* | 5.156 | 0,749 | | | |
| 3* | 5.420 | 0.350 | 1.5445 | 55.97 | |
| 4* | 5.165 | 0.100 | | | |
| 5* | 2.827 | 0.500 | 1.5731 | 37.65 | |
| 6* | 2.474 | d6 | | | |
| 7* | 1.873 | 0.933 | 1.5445 | 55.97 | (Aperture stop) |
| 8* | -132.197 | 0.100 | | | |
| 9* | 4.338 | 0.350 | 1.6714 | 19.27 | |
| 10* | 2.450 | 0.100 | | | |
| 11* | 2.163 | 0.640 | 1.5445 | 55.97 | |
| 12* | -355.506 | 0.700 | | | |
| 13* | -1.955 | 0.450 | 1.6397 | 23.49 | |
| 14* | -2.990 | 0.448 | | | |
| 15* | 12.929 | 0.400 | 1.5445 | 55.97 | |
| 16* | 3.710 | 0.244 | | | |
| 17* | 24.869 | 0.687 | 1.6714 | 19.27 | |
| 18* | 13.024 | d18 | | | |
| 19 | ∞ | 0.210 | 1.5168 | 64.17 | |
| 20 | ∞ | 0.240 | | | |
| * represents aspheric surface | | | | | |

(Table 7) Aspheric data (in which an aspheric coefficient not shown is 0.00)

(Table 7) Aspheric data (in which an aspheric coefficient not shown is 0.00)

| Surface number | k | A4 | A6 | A8 | A10 | A12 | A14 | A16 | A18 | A20 |
|---|---|---|---|---|---|---|---|---|---|---|
| 1 | -5.0000E+00 | 9.8855E-03 | -4.9216E-04 | -2.0119E-05 | 1.4610E-06 | 5.3209E-11 | -1.5646E-12 | 2.0479E-21 | -1.8135E-23 | -4.6543E-25 |
| 2 | -5.0000E+00 | 3.8105E-03 | 2.7079E-03 | -2.4588E-04 | 1.5913E-05 | -1.6577E-17 | -1.9399E-19 | -2.5347E-21 | -3.5708E-23 | -5.2329E-25 |
| 3 | -4.3069E+00 | -7.7299E-03 | -6.2033E-04 | 6.5396E-05 | 5.5149E-06 | -1.6263E-10 | 1.8857E-12 | 5.6382E-15 | -6.2500E-16 | -4.9504E-22 |
| 4 | 4.4601E+00 | 1.5562E-02 | -2 4363E-03 | -3.9311E-04 | 5.7266E-05 | -3.2219E-09 | 2.8228E-11 | -1.6144E-17 | -9.2318E-20 | -5.5466E-22 |
| 5 | -5.0000E+00 | 1.9131E-03 | 1.5707E-03 | -1.6076E-04 | -6,5013E-06 | -1.7348E-08 | 2.9914E-10 | -3.1641E-17 | -2.1347E-19 | -1.4041E-21 |
| 6 | -4.6898E+00 | -1.6894E-02 | 1.6400E-03 | 2.3371E-04 | -8.4345E-05 | 5.5334E-09 | 4.8020E-11 | -3.4239E-17 | -2.1530E-19 | -1.4052E-21 |
| 7 | -1.9406E-01 | -6.7537E-04 | 8.4752E-05 | 1.9983E-04 | -2.1964E-04 | -2.7759E-06 | 1.6103E-07 | -3.3382E-17 | -2.1425E-19 | -1.4052E-21 |
| 8 | -5.0000E+00 | 7.3102E-03 | -2.5892E-03 | -8.1772E-04 | 4.3717E-04 | 2,0133E-06 | -6.3742E-08 | -2.5313E-21 | -3.5710E-23 | -5.2328E-25 |
| 9 | -5.0000E+00 | -1.1961E-02 | -1.7689E-03 | -1.1079E-04 | 1.0977E-03 | 7.0907E-06 | -3.2102E-07 | -3.3480E-17 | -2.1485E-19 | -1.4052E-21 |
| 10 | 1.9291E+00 | -4.2892E-02 | -4.2241E-03 | 5.5407E-03 | 8.8457E-05 | 1.5045E-05 | -6.6901E-07 | -3.3261E-17 | -2.1485E-19 | -1.4052E-21 |
| 11 | 5.6804E-01 | -1.6063E-02 | -3.6083E-03 | 2.7157E-03 | 2.1697E-04 | -3.8712E-07 | 6.3531E-09 | -8.0348E-18 | -4.2529E-20 | -2.3015E-22 |
| 12 | -5.0000E+00 | 4.4344E-03 | -5.8856E-03 | -4.3053E-03 | 4.3741E-04 | 1.0276E-07 | -7.2241E-09 | -7.8864E-18 | -4.2526E-20 | -2.3015E-22 |
| 13 | -6.9196E-01 | -5.4014E-03 | -1.4078E-02 | -4.7920E-03 | -5.8907E-03 | -1.3708E-17 | -1.8190E-19 | 2.4959E-21 | -3.5508E-23 | -5.2213E-25 |
| 14 | -5.0000E+00 | 1.9044E~02 | 3.9872E-03 | 1.0855E-04 | -1.2630E-04 | -1.3376E-17 | -1.8194E-19 | -2.4951E-21 | -3.5508E-23 | -5.2213E-25 |
| 15 | 5.0000E+00 | -4.6554E-02 | -3.2004E-04 | 1.8878E-03 | -3.1948E-04 | -1,5361E-17 | -1.8786E-19 | -2.5269E-21 | -3.5615E-23 | -5.2232E-25 |
| 16 | -5.0000E+00 | -3,0795E-02 | 4.1425E-03 | -3.7222E-04 | 1.9373E-06 | -1.3276E-17 | -1.7658E-19 | -2.5200E-21 | -3.5674E-23 | -5.2233E-25 |
| 17 | -2.5643E+00 | -7.6307E-03 | 1.1700E-03 | -6.4033E-05 | 6.1361E-07 | -4.6861E-09 | -6.0830E-12 | -4.74.90E-17 | -2.0087E-19 | -1.4088E-21 |
| 18 | 4.2565E+00 | -1,6918E-02 | 1.3881E-03 | 5.7356E-06 | -3.9020E-06 | 6.7332E-10 | -1.0469E-12 | -3.7370E-13 | -2.5665E-19 | -1.4640E-21 |

13

(Table 8) Various data (zoom ratio 1.537, image height 4.000)

| (Table 8) Various data | | | |
|---|---|---|---|
| | Wide-angle | Intermediate | Telephoto |
| Focal length | 3.585 | 4.073 | 5.510 |
| F number | 2.000 | 2.154 | 2.609 |
| Half field of view | 64.967 | 50.969 | 35.509 |
| Total length of lens | 9.800 | 9.532 | 9.265 |
| d6 | 1.774 | 1.268 | 0.300 |
| d18 | 0.424 | 0.662 | 1.364 |

(Table 9) Data of zoom lens groups

(Table 9) Data of zoom lens groups

| Group | Initial surface | Focal length | Configuration length of lens | Movement amount of lens |
|---|---|---|---|---|
| 1 | 1 | -5.684 | 2.099 | -0.535 |
| 2 | 7 | 2.662 | 5.053 | 0.939 |

(Table 10) Magnification; of zoom lens groups

| Group | Initial surface | Wide-angle | Intermediate | Telephoto |
|---|---|---|---|---|
| 1 | 1 | 0.000 | 0.000 | 0.000 |
| 2 | 7 | -0.631 | -0.717 | -0.969 |

(Third embodiment)

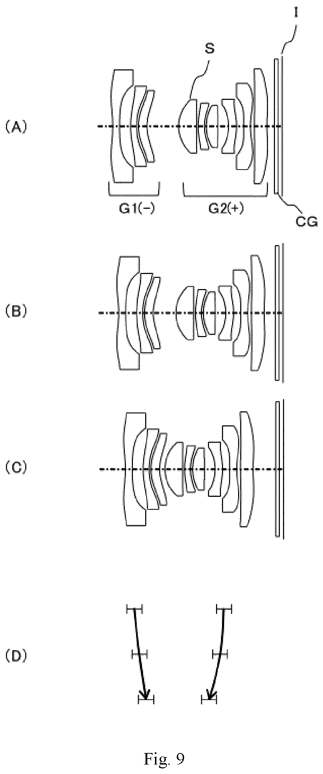

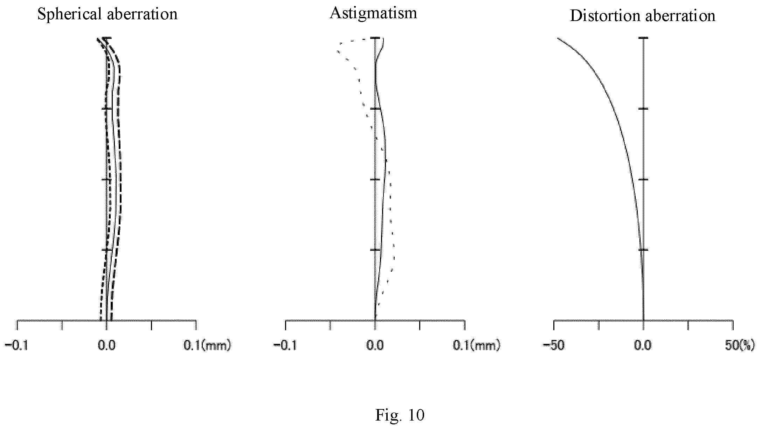

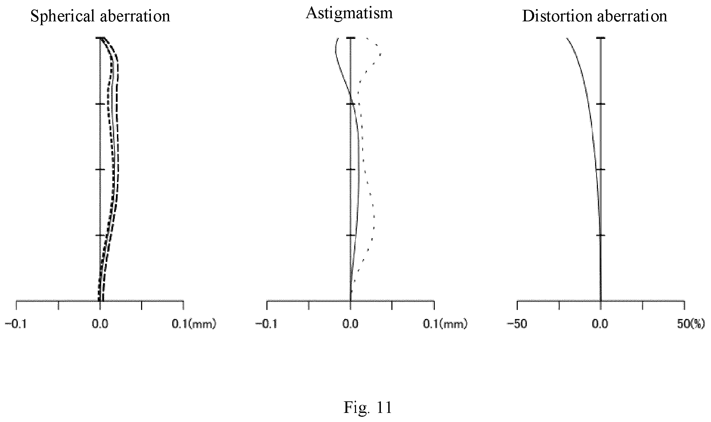

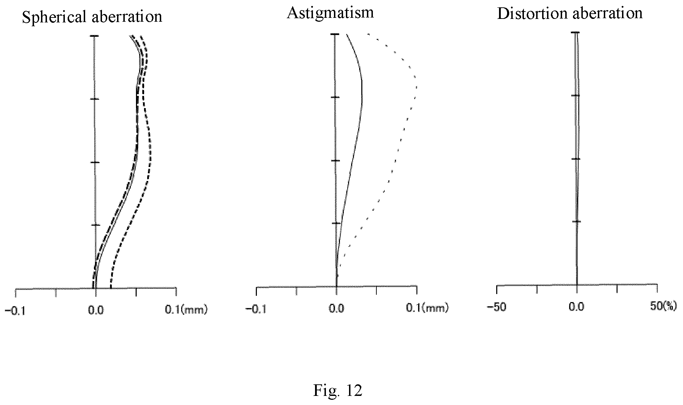

Fig. 9 is a lens layout view showing a wide- ingle end state (Fig. 9 (A)), an intermediate focus position state (Fig. 9 (B)) and a telephoto end state (Fig. 9 (C)) of a zoom lens according to an embodiment (third embodiment) of this implementation, and a diagram showing a change of a first lens group G1 and a second lens group G2 from the wide-angle end state to the telephoto end state (Fig. 9 (D). Fig. 10 is a longitudinal aberration diagram of the wide-angle end state of the third embodiment. Fig. 11 is a longitudinal aberration diagram of the intermediate focus position state of the third embodiment. Fig. 12 is a longitudinal aberration diagram of the telephoto end state of the third embodiment.

The zoom lens in the third embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.

In the third embodiment with the above configuration, in a process of zooming from the wide-angle end state to the telephoto end state, the first lens group G1 gradually moves toward in image side and the second lens group G2 gradually moves toward in object side. That is, the first lens group G1 and the second lens group G2 move by different trajectories to reduce an interval therebetween The aperture stop S moves integrally with the second lens group G2.

In the following, values of parameters of the third embodiment are shown.

(Table 11) Surface data

(Table 11) Surface data

| Surface number | r | d | nd | vd | |
|---|---|---|---|---|---|
| 1* | -6.544 | 0.400 | 1.5731 | 37.65 | |

(continued)

| Surface number | r | d | nd | vd | |
|---|---|---|---|---|---|
| 2* | 12.856 | 0.635 | | | |
| 3* | 5.239 | 0.350 | 1.5439 | 55.93 | |
| 4* | 4.034 | 0.100 | | | |
| 5* | 2.424 | 0.500 | 1.6714 | 19.27 | |
| 6* | 2.339 | d6 | | | |
| 7* | 2.005 | 1.030 | 1.5439 | 55.93 | (Aperture stop) |
| 8* | -85.217 | 0.100 | | | |
| 9* | 3.454 | 0.350 | 1.6714 | 19.27 | |
| 10* | 2.276 | 0.117 | | | |
| 11* | 2.310 | 0.687 | 1.5439 | 55.93 | |
| 12* | -21.423 | 0.617 | | | |
| 13* | -2.220 | 0.450 | 1.6714 | 19.27 | |
| 14* | -3.271 | 0.411 | | | |
| 15* | 22.223 | 0.400 | 1.5439 | 55.93 | |
| 16* | 3.697 | 0.228 | | | |
| 17* | 23.873 | 0.723 | 1.6714 | 19.27 | |
| 18* | 10.888 | d18 | | | |
| 19 | ∞ | 0.210 | 1.51168 | 64.17 | |
| 20 | ∞ | 0.240 | | | |
| * represents aspheric surface | | | | | |

(Table 12) Aspheric data (in which an aspheric coefficient not shown is 0.00)

(Table 12) Aspheric data (in which an aspheric coefficient not shown is 0.00)

| Surface number | k | A4 | A6 | A8 | A10 | A12 | A14 | A16 | A18 | A20 |
|---|---|---|---|---|---|---|---|---|---|---|
| 1 | -5.0000E+00 | 1.5790E-02 | -8.6839E-04 | -1.8002E-05 | 1.7675E-06 | 5.4107E-11 | -1.5644E-12 | 2.4566E-1.8 | 4.0279E-20 | 6.4565E-22 |
| 2 | 4.1418E+00 | 1.5194E-03 | 5.3543E-03 | -7.1342E-04 | 5.3664E-05 | 1.0122E-14 | 1.5899E-16 | 2.5551E-18 | 4.0661E-20 | 6.4697E-22 |
| 3 | -9.0361E-01 | -6.7511E-03 | -6.5881E-04 | -5.5855E-05 | 1.5926E-05 | -1.6262E-10 | 1.8858E-12 | 5.6407E-15 | -6.2496E-16 | 1.5249E-22 |
| 4 | 8.8630E-01 | 2.1763E-02 | -5.5084E-03 | -7.0385E-04 | 1.2611E-04 | -3.2218E-09 | 2.8228E-11 | -1.3585E-17 | -5.1615E-20 | 9.2840E-23 |
| 5 | -3.9239E+00 | -1.8608E-03 | 1.5738E-03 | -5.9738E-04 | 7.6401E-06 | -1.7348E-08 | 2.9914E-10 | -2.9089E-17 | -1.7277E-19 | -7.5658E-22 |
| 6 | -4.4037E+00 | -1.6519E-02 | 2.3754E-03 | -9.4178E-05 | -5.2195E-05 | 5.5334E-09 | -4.8020E-11 | -3.1681E-17 | -1.7460E-19 | -7.5771E-22 |
| 7 | -2.6326E-01 | 2.0504E-03 | 4.9560E-04 | 1.2474E-04 | 2.9506E-05 | -2.7759E-06 | 1.6103E-07 | -3.0824E-17 | -1.7355E-19 | -7.5767E-22 |
| 8 | -5.0000E+00 | 53745E-03 | 1.5537E-05 | -7.8591E-04 | 1.9773E-04 | 2.0133E-06 | -8.3742E-08 | 2.5556E-18 | 4.0664E-20 | 6.4699E-22 |
| 9 | -5.0000E+00 | -2.4326E-02 | -1.1077E-08 | -5.8030E-04 | 8.4883E-04 | 7.0907E-06 | -3.2102E-07 | -3.0922E-17 | ~1.7415E-19 | -7.5767E-22 |
| 10 | 1.1954E+00 | -5.9130E-02 | -8.7131E-03 | 4.8541E-03 | -4.7097E-04 | 1.5045E-05 | -6.6901E-07 | -3.0703E-17 | -1.7415E-19 | -7.5767E-22 |
| 11 | 6.4829E-01 | -8.6422E-03 | -4.8968E-03 | 2.3136E-03 | 2.3963E-04 | -3.8712E-07 | 6.3531E-09 | -5.4766E-18 | -1.8291E-21 | 4.1736E-22 |
| 12 | 8.9891E-01 | 9.5986E--03 | 2.3960E-03 | -3.7604E-03 | 8.1633E-04 | 1.0276E-07 | -7.2241E-09 | -5.3283E-18 | -1.8264E-21 | 4.1736E-22 |
| 13 | -1.7023E+00 | 1.1623E-02 | -1.1007E-02 | -1.6681E-03 | -3.1048E-03 | 1.0089E-14 | 1.6060E-16 | 2.5556E-18 | 4.0664E-20 | 6.4699E-22 |
| 14 | -5.0000E+00 | 3.3542E-02 | 6.2560E-05 | 5.7270E-04 | -2.0160E-04 | 1.0093E-14 | 1,6061E-16 | 2.5556E-18 | 4.0664E-20 | 6.4699E-22 |
| 15 | 5.0000E+00 | -6.5048E-02 | 1.4451E-03 | 2.0513E-04 | -6.8590E-05 | 8.0347E-15 | 1.2410E-16 | 1.8988E-18 | 2,9040E-20 | 4.4410E-22 |
| 16 | -5.0000E+00 | -3.7680E-02 | 6.0479E-03 | -7.1703E-04 | 2.6648E-05 | 8.1317E-15 | 1.2404E-16 | 1.8989E-18 | 2.9039E-20 | 4.440BE-22 |
| 17 | 5.0000E+00 | -8.0646E-03 | 1.2440E-03 | -8.3373E-05 | 1.6720E-06 | -4.6861E-09 | -6.0828E-12 | -4.4931E-17 | -1.6113E-19 | -7.6747E-22 |
| 18 | 4.5427E+00 | -2.0437E-02 | 1.8420E-03 | -3.4149E-05 | -2.9810E-06 | 6.7333E-10 | -1.0467E-12 | -3.7370E-13 | -2.1496E-19 | -8.1670E-22 |

(Table 13) Various data (zoom ratio 1.523, image height 4.000)

| (Table 13) various data | | | |
|---|---|---|---|
| | Wide-angle | Intermediate | Telephoto |
| Focal length | 3.590 | 4.063 | 5.469 |
| F number | 1.803 | 1.934 | 2.325 |
| Half field of view | 65.011 | 50.999 | 35.520 |
| Total length of lens | 9.800 | 9.502 | 9.1560 |
| d6 | 1.824 | 1.307 | 0.300 |
| d18 | 0.429 | 0.648 | 1.313 |

(Table 14) Data of zoom lens groups

(Table 14) Data of zoom lens groups

| Group | Initial surface | Focal length | Configuration length of lens | Movement amount of lens |
|---|---|---|---|---|
| 1 | 1 | -5.990 | 1.985 | -0.640 |
| 2 | 7 | 2.658 | 5.112 | 0.884 |

Table 15 Magnifications of zoom lens groups

| Group | Initial surface | Wide-angle | Intermediate | Telephoto |
|---|---|---|---|---|
| 1 | 1 | 0.000 | 0.000 | 0.000 |
| 2 | 7 | -0.599 | -0.678 | -0.913 |

(Fourth embodiment)

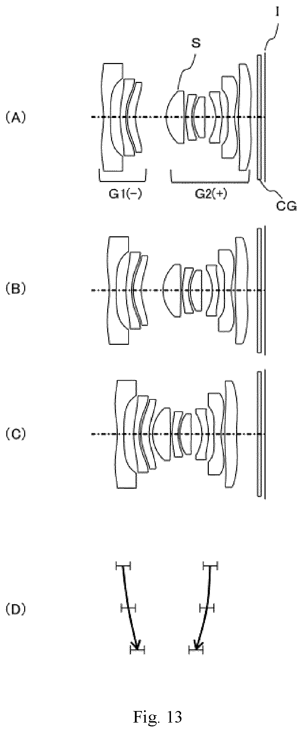

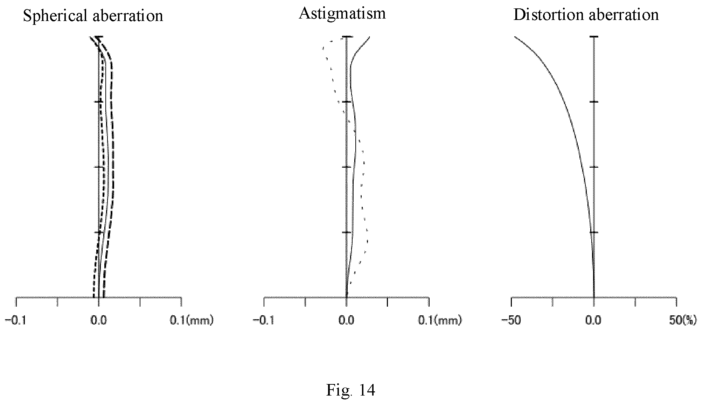

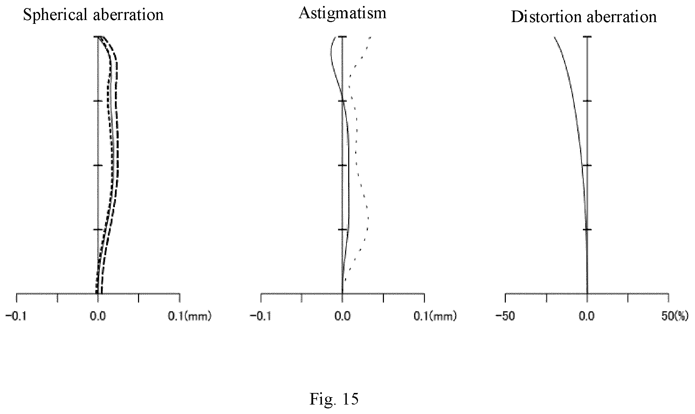

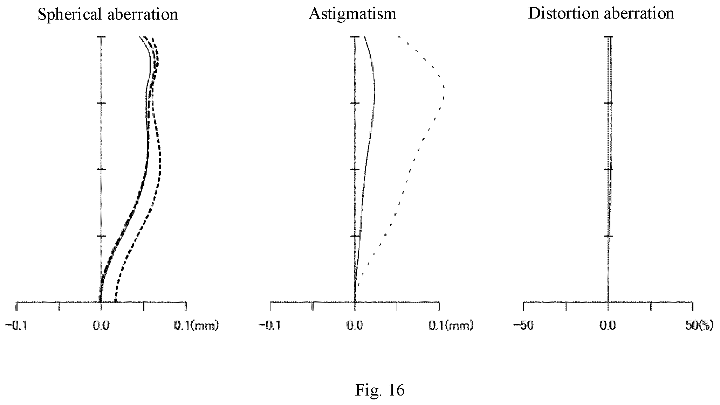

Fig. 13 is a lens layout view showing a wide-angle end state (Fig. 13 (A)), an intermediate focus position state (Fig. 13 (B)) and a telephoto end state (Fig. 13 (C)) of a zoom lens according to an embodiment (fourth embodiment) of this implementation, and a diagram showing a change of a first lens group G1 and a second lens group G2 from the wide-angle end state to the telephoto end state (Fig. 13 (D)). Fig. 14 is a longitudinal aberration diagram of the wide-angle end state of the fourth embodiment. Fig. 15 is a longitudinal aberration diagram of the intermediate focus position state of the fourth embodiment. Fig. 16 is a longitudinal aberration diagram of the telephoto end state of the fourth embodiment.
The zoom lens in the fourth embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.
In the fourth embodiment with the above configuration, in a process of zooming from the wide-angle end state to the telephoto end state, the first lens group G1 gradually moves toward in image side and the second lens group G2 gradually moves toward in object side. That is, the first lens group G1 and the second lens group G2 move by different trajectories to reduce an interval therebetween The aperture stop S moves integrally with the second lens group G2.
In the following, values of parameters of the fourth embodiment are shown.

(Table 16) Surface data

(Table 16) Surface data

| Surface number | r | d | nd | vd | |
|---|---|---|---|---|---|
| 1* | -5.798 | 0.424 | 1.5740 | 37.90 | |

(continued)

| Surface number | r | d | nd | vd | |
|---|---|---|---|---|---|
| 2* | 19.458 | 0.606 | | | |
| 3* | 5.455 | 0.350 | 1.5445 | 55.96 | |
| 4* | 4.240 | 0.100 | | | |
| 5* | 2.624 | 0.500 | 1.6714 | 19.27 | |
| 6* | 2.585 | d6 | | | |
| 7* | 2.097 | 1.110. | 1.5452 | 55.26 | (Aperture stop) |
| 8* | -35.445 | 0.100 | | | |
| 9* | 3.681 | 0,366 | 1.6714 | 19.27 | |
| 10* | 2.248 | 0.119 | | | |
| 11* | 2.317 | 0.697 | 1.5445 | 55.96 | |
| 12* | -44.377 | 0.680 | | | |
| 13* | -2.092 | 0.400 | 1.6494 | 20.87 | |
| 14* | -2.731 | 0.343 | | | |
| 15* | 8.657 | 0.438 | 1.5488 | 50.78 | |
| 16* | 3.139 | 0,236 | | | |
| 17* | 16.975 | 0.731 | 1.6653 | 19.99 | |
| 18* | 8.816 | d18 | | | |
| 19 | ∞ | 0.210 | 1.5168 | 64.11 | |
| 20 | ∞ | 0.240 | | | |
| * represents aspheric surface | | | | | |

(Table 17) Aspheric data (in which an aspheric coefficient not shown is 0.00)

(Table 17) Aspheric data (in which an aspheric coefficient not shown is 0.00)

| Surface number | k | A4 | A6 | A8 | A10 | A12 | A14 | A16 | A18 | A20 |
|---|---|---|---|---|---|---|---|---|---|---|
| 1 | -4.6486E+00 | 1.4913E-02 | -8.0592E-04 | -1.2938E-05 | 1.3B03E-06 | 4.3544E-11 | -1.2093E-12 | 1.8358E-18 | 2.8117E-20 | 4.3579E-22 |
| 2 | 4.9642E+00 | 2.6094E-03 | 4.7113E-03 | -5.8241E-04 | 4.0734E-05 | 7.4460E-15 | 1.1830E-16 | 1.8445E-18 | 2.8407E-20 | 4.3671E-22 |
| 3 | -4,9870E-01 | -6.0299E-03 | -5.1984E-04 | -5.2733E-05 | 1.1342E-05 | -1.3079E-10 | 1.4518E-12 | 4.1911E-15 | -4.4632E-16 | 9.1285E-23 |
| 4 | 6.6665E-01 | 2.0148E-02 | -4.9182E-03 | -5.6069E-04 | 1.0048E-04 | -2.5912E-09 | 2.1821E-11 | -1.0148E-17 | -3.7493E-20 | 5.6339E-23 |
| 5 | -4.2916E+00 | -1.1459E-03 | 1.3019E-03 | -5.3045E-04 | 1.7592E-05 | -1.3952E-08 | 2.3124E-10 | -2.1672E-17 | -1.2401E-19 | -5.3747E-22 |
| 6 | -4.7080E+00 | -1.5655E-02 | 2.1794E-03 | -5.8966E-05 | -4.0095E-05 | 4.4503E-09 | -3.7121E-11 | -2.3594E-17 | -1.2533E-19 | -5.2751E-22 |
| 7 | -2.7494E-01 | 1.7980E-03 | 4.4795E-04 | 1.1021E-04 | 5.2973E-06 | -2.2326E-06 | 1.2448E-07 | -2.2957E-17 | -1.2457E-19 | -5.2748E-22 |
| 8 | 5.0000E+00 | 4..2231E-03 | -2.9541E-04 | -6,2406E-04 | 1.8077E-04 | 1.6193E-06 | -4.9274E-08 | 1.8448E-18 | 2.8409E-20 | 4.3672E-22 |
| 9 | -4.9702E+00 | -2.5064E-02 | -5.0243E-04 | -4.3309E-04 | 1.0835E-04 | 5.7028E-06 | -2.4816E-07 | -2.3030E-17 | -1.2500E-19 | -5.2748E-22 |
| 10 | 1.1500E+00 | -5.5465E-02 | -8,3504E-03 | 3.6611E-03 | -4.8399E-04 | 1.2100E-05 | -5.1717E-07 | -2,2867E-17 | -1.2500E-19 | -5.2748E-22 |
| 11 | 6.2275E-01 | -6.8510E-08 | -5.3124E-03 | 1.8052E-03 | -4.2906E-05 | -3.113.4E-07 | 4.9111E-09 | -4.1233E-18 | -1.9384E-21 | 2.7910E-22 |
| 12 | -5.0000E+00 | 8.4577E-03 | 3.5751E-03 | -2.8568E-03 | 2.5557E-04 | 8.2649E-08 | -5.5845E-09 | -4.0131E-18 | -1.9365E-21 | 2.7910E-22 |
| 13 | -2.5309E+00 | 1.7479E-02 | -7.9709E-03 | -1.4059E-03 | -1.5259E-03 | 7.7180E-15 | 1.1952E-16 | 1.8448E-18 | 2.8409E-20 | 4.3672E-22 |
| 14 | -4.9956E+00 | 3.4382E-02 | 2.9177E-04 | 6.4487E-04 | -1.6781E-04 | 7.7242E-15 | 1.1953E-16 | 1.8448E-1,8 | 2.8409E-21 | 4.3672E-22 |
| 15 | 3.4418E-01 | -6,6428E-02 | 1.7928E-03 | 2.4074E-04 | -5.6437E-05 | 6.0648E-15 | 9.1296E-17 | 1.3567E-18 | 2.0107E-20 | 2.9745E-22 |
| 16 | -5.0000E+00 | -3.5727E-02 | 5.9616E-03 | -6.8796E-04 | 2.2165E-05 | 9.0140E-15 | 9.1357E-17 | 1.3571E-18 | 2.0112E-20 | 2.9747E-22 |
| 17 | 3.8375E+00 | -6.0821E-03 | 9.0108E-04 | -8.3569E-05 | 2.4987E-06 | -3.1689E-09 | -4,7023E-12 | -3.3444E-11 | -1.1571E-19 | -5.3421E-22 |
| 18 | 1.8382E+00 | -1.9625E-02 | 1.7102E-03 | -3.5077E-05 | -2.5656E-06 | 5.4161E-10 | -8.0903E-13 | -2.7766E-13 | -1.5414E-19 | -5.6799E-22 |

(Table 18) Various data (zoom ration 1.525, image height 4.000)

| (Table 18) Various data | | | |
|---|---|---|---|
| | Wide-angle | Intermediate | Telephoto |
| Focal length | 3.589 | 4.059 | 5.473 |
| F number | 1.700 | 1.821 | 2.184 |
| Half field of view | 64.999 | 50.992 | 35,514 |
| Total length of lens | 10.000 | 9.637 | 9.156 |
| d6 | 1.901 | 1.328 | 0.200 |
| d18 | 0.450 | 0.659 | 1.307 |

(Table 19) Data of zoom lens groups

(Table 19) Data of zoom lens groups

| Group | Initial surface | Focal length | Configuration length of lens | Movement amount of lens |
|---|---|---|---|---|
| 1 | 1 | -6.414 | 1.980 | -0.844 |
| 2 | 7 | 2.764 | 5.219 | 0.857 |

(Table 20) Magnifications of zoom lens groups

| Group | Initial surface | Wide-angle | Intermediate | Telephoto |
|---|---|---|---|---|
| 1 | 1 | 0.000 | 0.000 | 0.000 |
| 2 | 7 | -0.560 | -0.633 | -0.853 |

(Fifth embodiment)

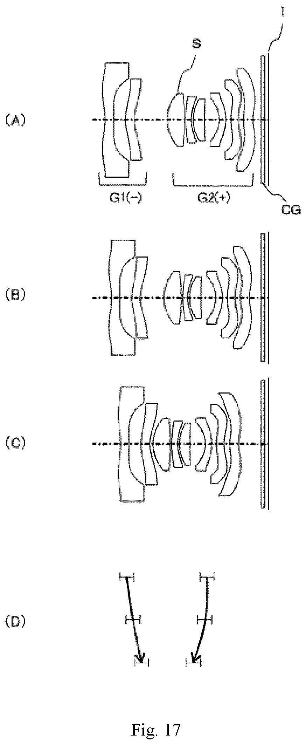

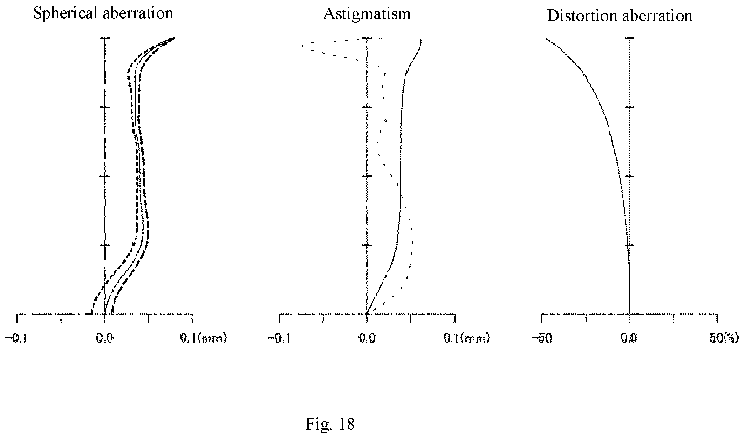

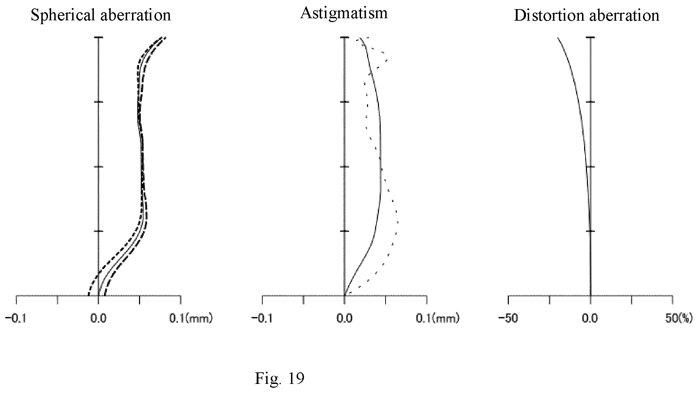

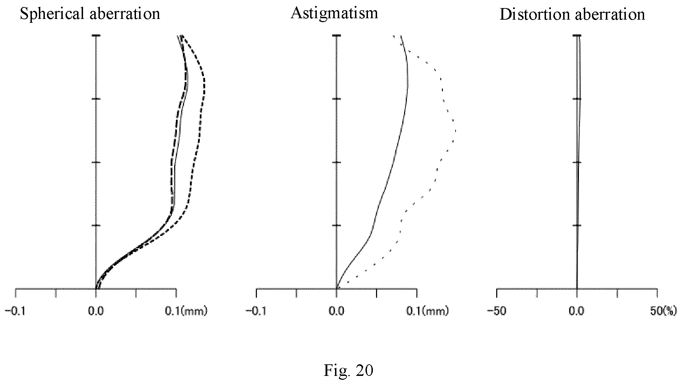

Fig. 17 is a lens layout view showing a wide-angle end state (Fig. 17 (A)), an intermediate focus position state (Fig. 17 (B)) and a telephoto end state (Fig. 17 (C)) of a zoom lens according to an embodiment (fifth embodiment) of this implementation and a change of a first lens group G1 and a second lens group G2 from the wide-angle end state to the telephoto end state (Fig. 17 (D)). Fig. 18 is a longitudinal aberration diagram of the wide-angle end state of the fifth embodiment. Fig. 19 is a longitudinal aberration diagram of the intermediate focus position state of the fifth embodiment. Fig. 20 is a longitudinal aberration diagram of the telephoto end state of the fifth embodiment.

The zoom lens in the fifth embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.

In the fifth embodiment with the above configuration, in a process of zooming from the wide-angle end state to the telephoto end state, the first lens group G1 gradually moves toward in image side and a second lens group G2 gradually moves toward an object side. That is, the first lens group G1 and the second lens group G2 move by different trajectories to reduce an interval therebetween The aperture stop S moves integrally with the second lens group G2.

In the following, values of parameters of the fifth embodiment are shown.

(Table 21) Surface data

(Table 21) Surface data

| Surface number | r | d | nd | vd | |
|---|---|---|---|---|---|
| 1* | -3.839 | 0.516 | 1.5439 | 55.93 | |
| 2* | -16.153 | 0.736 | | | |
| 3* | 2.51.5 | 0.535 | 1.5439 | 55.93 | |
| 4* | 2.045 | d4 | | | |
| 5* | 2.237 | 1.044 | 1.5439 | 55.93 | (Aperture stop) |
| 6* | -22.133 | 0.100 | | | |
| 7* | 3.743 | 0.350 | 1.6714 | 19.27 | |
| 8* | 2.242 | 0.110 | | | |
| 9* | 2.321 | 0.666 | 1.5439 | 55.93 | |
| 10* | 49.222 | 0.918 | | | |
| 11* | -1.639 | 0.400 | 1.6161 | 25.78 | |
| 12* | -2.219 | 0.297 | | | |
| 13* | 5.207 | 0.457 | 1.5439 | 55.93 | |
| 14* | 2.868 | 0.322 | | | |
| 15* | 2.268 | 0.560 | 1.5439 | 55.93 | |
| 16* | 2.219 | d16 | | | |
| 17 | ∞ | 0.210 | 1.5168 | 64.17 | |
| 18 | ∞ | 0.240 | | | |
| * represents aspheric surface | | | | | |

(Table 22) Aspheric data ( which an aspheric coefficient not shown is 0.00

(Table 22) Aspheric data (in which an aspheric coefficient not shown is 0.00)

| Surface number | k | A4 | A6 | A8 | A10 | A12 | A14 | A16 | A18 | A20 |
|---|---|---|---|---|---|---|---|---|---|---|
| 1 | -4.8486E+00 | 3.2501E-02 | -6.6747E-03 | 1.2406E-03 | -1.9859E-04 | 2.5684E-05 | -2.6005E-06 | 1.8324E-01 | -7.5868E-09 | 1.3599E-10 |
| 2 | 1.7818E+00 | 2.6198E-02 | 3.5781E-03 | -2.2298E-03 | 7.2917E-04 | -1.5260E-04 | 2.8751E-05 | -4.3454E-06 | 3.6073E-07 | -1.1583E-08 |
| 3 | -5.0000E+00 | -3.7634E-02 | 7.6720E-03 | 3.4625E-04 | -5.4831E-04 | 9.8281E-05 | -1.5291E-06 | -1.4863E-06 | 1.7782E-07 | -6.5259E-09 |
| 4 | -4.4405E+00 | -2.1911E-02 | -5.4695E-03 | 1.1227E-02 | -7.4993E-03 | 2.9151E-03 | -7.1631E-04 | 1.1011E-04 | -9.6744E-06 | 3.7072E-07 |
| 5 | -3.8396E-01 | -7.8671E-04 | 1.2762E-02 | -3.2286E-02 | 4.7226E-02 | -4.2515E-02 | 2.3891E-02 | -8.1884E-03 | 1.5652E-03 | -1.2773E-04 |
| 6 | 5.0000E+00 | -4.6615E-02 | 7.9948E-02 | -8.3723E-02 | 5.3091E-02 | -1.5988E-02 | -2.0580E-03 | 3.4188E-03 | -1.0649E-03 | 1.1577E-04 |
| 7 | -3.6195E+00 | -9.2347E-02 | 1.2200E-01 | -1.5758E-01 | 1.6647E-01 | -1.2826E-01 | 6.7812E-02 | -2.2988E-02 | 4.4596E-03 | -3.7607E-04 |
| 8 | 7.4306E-01 | -8.1342E-02 | 4.0317E-02 | -1.7947E-02 | -2.4087E-02 | 6.4104E-02 | -6.4268E-02 | 3.4969E-02 | -1.0046E-02 | 1.1905E-03 |
| 9 | 4.9260E-01 | -1.4753E-02 | 3.4554E-02 | -9.5921E-02 | 1.6027E-01 | -1.7083E-01 | 1.1711E-01 | -4.9996E-02 | 1.2076E-02 | -1.2553E-03 |
| 10 | -5.0000E+00 | 1.5748E-02 | 2.1461E-02 | 6.2892E-02 | -1.0744E-01 | 1.0825E-01 | -6.6426E-02 | 2.3710E-02 | -4.4715E-03 | 3.4305E-04 |
| 11 | -1.2481E+00 | 5.8130E-03 | -2.3944E-04 | -2.1995E-01 | 5.6562E-01 | -7.2837E-01 | 5.4972E-01 | -2.4699E-01 | 6.0848E-02 | -6.2962E-03 |
| 12 | -4.2134E+00 | 7.5953E-02 | -2.4897E-01 | 3.2149E-01 | -2.4706E-01 | 1.2827E-01 | -4.4516E-02 | 9.7850E-03 | -1.2198E-03 | 6.5203E-05 |
| 13 | -3.5084E+00 | 1.2022E-01 | -2.8185E-01 | 2.7694E-01 | -1.7987E-01 | 7.761.BE-02 | -2.1720E-02 | 3.7183E-03 | -3.4896E-04 | 1.3649E-05 |
| 14 | -1.0531E-01 | -2.2209E-02 | -5.2171E-02 | 4.3535E-02 | -2.2308E-02 | 1.4738E-03 | -1.6341E-03 | 2.2260E-04 | -1.6937E-05 | 5.4418E-07 |
| 15 | -3.9094E+00 | -1.6191E-01 | 6.6162E-02 | -1.7259E-02 | 2.0576E-03 | 2.3288E-04 | -1.1649E-04 | 1.6391E-05 | -1.0600E-06 | 2.8777E-08 |
| 16 | -4.3302E+00 | -1.1687E-01 | 5.0031E-02 | -1.6462E-02 | 4.0212E-03 | -6.756BE-04 | 7,4064E-05 | -5.0120E-06 | 1.8836E-07 | -2.9871E-09 |

(Table 23) Various data (zoom ratio 1.513, image height 4.000)

| (Table 23) Various data | | | |
|---|---|---|---|
| | Wide-angle | Intermediate | Telephoto |
| Focal length | 3.582 | 4.025 | 5.418 |
| F number | 1.703 | 1.811 | 2.151 |
| Half field of view | 64.932 | 50.971 | 35.510 |
| Total length of lens | 10.000 | 9.612 | 9.047 |
| d4 | 2.014 | 1.425 | 0.200 |
| d16 | 0.524 | 0.725 | 1.385 |

(Table 24) Data of zoom lens groups

(Table 24) Data of zoom lens groups

| Group | Initial surface | Focal length | Configuration length of lens | Movement amount of lens |
|---|---|---|---|---|
| 1 | 1 | -6.680 | 1.787 | -0.953 |
| 2 | 5 | 2.869 | 5.225 | 0.861 |

(Table 25) Magnifications of zoom lens groups

| Group | Initial surface | Wide-angle | Intermediate | Telephoto |
|---|---|---|---|---|
| 1 | 1 | 0.000 | 0.000 | 0.000 |
| 2 | 5 | -0.536 | -0.602 | -0.811 |

(Sixth embodiment)

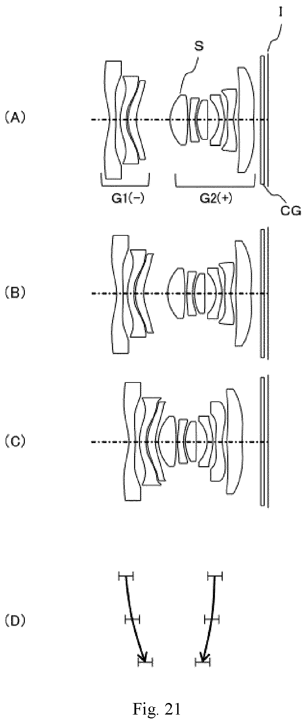

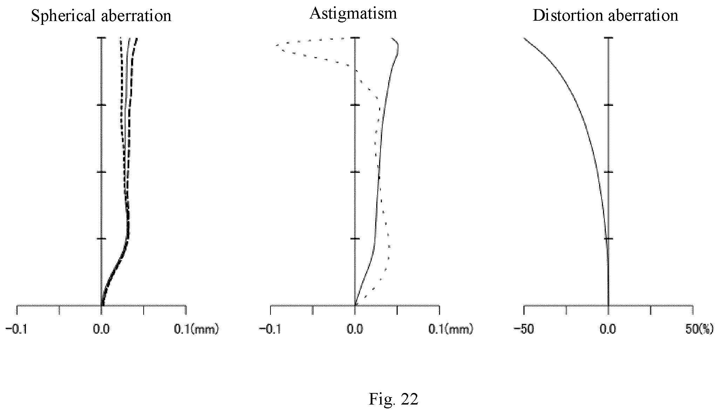

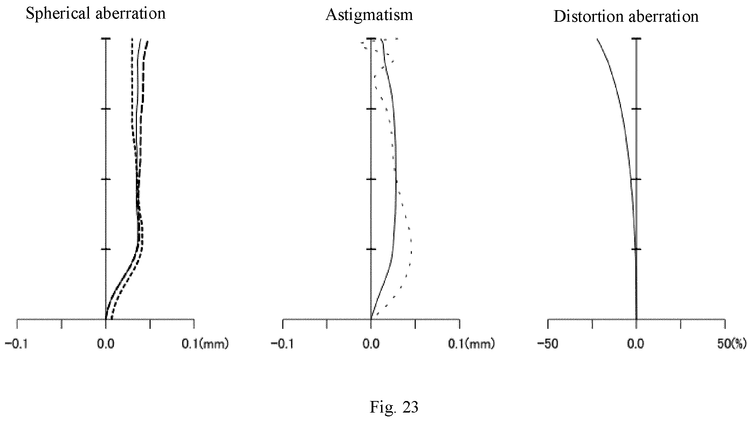

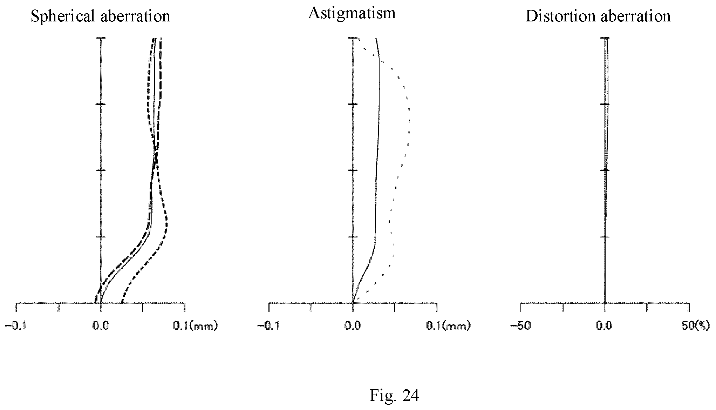

Fig. 21 is a lens layout view showing a wide-angle end state (Fig. 21 (A)), an intermediate focus position state (Fig. 21 (B)) and a telephoto end state (Fig. 21 (C)) of a zoom lens according to an embodiment (sixth embodiment) of this implementation and a diagram showing a change of a first lens group G1 and a second lens group G2 from the wide-angle end state to the telephoto end state (Fig. 21 (D)). Fig. 22 is a longitudinal aberration diagram of the wide-angle end state of the sixth embodiment. Fig. 23 is a longitudinal aberration diagram of the intermediate focus position state of the sixth embodiment. Fig. 24 is a longitudinal aberration diagram of the telephoto end state of the sixth embodiment.

The zoom lens in the sixth embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.

In the sixth embodiment with the above configuration, in a process of zooming from the wide-angle end state to the telephoto end state, the first lens group G1 gradually moves toward an image side and the second lens group G2 gradually moves foward an object side. That is, the first lens group G1 and the second lens group G2 move by different trajectories to reduce an interval therebetween The aperture stop S moves integrally with the second lens group G2.

In the following, values of parameters of the sixth e nbodiment are shown.

(Table 26) Surface data

(Table 26) Surface data

| Surface number | r | d | nd | vd | |
|---|---|---|---|---|---|
| 1* | -2.897 | 0.400 | 1.5731 | 37.65 | |

(continued)

| Surface number | r | d | nd | vd | |
|---|---|---|---|---|---|
| 2* | -10.666 | 0.255 | | | |
| 3* | 3.417 | 0.383 | 1.5439 | 55.93 | |
| 4* | 3.874 | 0.100 | | | |
| 5* | 2.259 | 0.500 | 1.6714 | 19.27 | |
| 6* | 2.051 | d6 | | | |
| 7* | 1.995 | 1.061 | 1.5439 | 55.93 | (Aperture stop) |
| 8* | -17.385 | 0.100 | | | |
| 9* | 3.618 | 0.350 | 1.6714 | 19.27 | |
| 10* | 2.063 | 0.122 | | | |
| 11* | 2.389 | 0.655 | 1.5439 | 55.93 | |
| 12* | -28.147 | 0.674 | | | |
| 13* | -1.519 | 0.350 | 1.6362 | 23.91 | |
| 14* | -2.120 | 0.164 | | | |
| 15* | 8.071 | 0.400 | 1.5439 | 55.93 | |
| 16* | 2,353 | 0,295 | | | |
| 17* | 4.853 | 0.932 | 1.6714 | 19.27 | |
| 18* | 7.787 | d18 | | | |
| 19 | co | 0.210 | 1.5168 | 64.17 | |
| 20 | co | 0.240 | | | |
| * represents aspheric surface | | | | | |

(Table 27) Aspheric data (in which an aspheric coefficient not shown is 0.00

(Table 27) Aspheric data (in which an aspheric coefficient not shown is 0.00)

| Surface number | k | A4 | A6 | A8 | A10 | A12 | A14 | A16 | A18 | A20 |
|---|---|---|---|---|---|---|---|---|---|---|
| 1 | 4.8800E+00 | 2.4941E-02 | -4.2099E-03 | 3.9177E-04 | 2.6186E-05 | -1.3887E-05 | 1.9099E-06 | -1.3458E-07 | 4.9490E-09 | -7.5283E-11 |
| 2 | -3.0958E+00 | 6.9506E-03 | 5.0143E-03 | -8.0375E-04 | -3.7628E-04 | 2.2382E-04 | -5.0429E-05 | 5.7480E-06 | -3.2953E-07 | 7.6211E-09 |
| 3 | -4.9570E+00 | 6.5975E-02 | -4.2899E-02 | -7.5536E-04 | 9.0143E-03 | -4.0715E-03 | 9.0713E-04 | -1.1322E-04 | 7.5884E-06 | -2.1376E-07 |
| 4 | 1.9793E-01 | 1.1140E-01 | -1.1639E-01 | 3.9635E-02 | -9.2017E-03 | 1.2936E-03 | 1.2662E-06 | -3.8848E-05 | 6.2533E-06 | -3.2129E-07 |
| 5 | -3.9397E+00 | 3.8207E-02 | -4.7928E-02 | 4.9212E-02 | -3.2886E-02 | 1.2684E-02 | -2.8044E-03 | 3.4426E-04 | 2.1089E-05 | 4.7179E-07 |
| 6 | -4.9479E+00 | 1.8800E-02 | 2.1585E-03 | 6.7502E-03 | -8.9137E-03 | 5.0501 E-03 | -1.5349E-03 | 2.6087E-04 | -2.3711E-05 | 9.1922E-07 |
| 7 | -4.3761E-01 | 3.2087E-03 | 8.5479E-03 | -2.3687E-02 | 3.8146E-02 | -3.8094E-02 | 2.3530E-02 | -8.8450E-03 | 1.8395E-03 | -1.6444E-04 |
| 8 | 5.0000E+00 | -3.2081E-02 | 8.3728E-02 | -1.4365E-01 | 1.6332E-01 | -1,2918E-01 | 6.9414E-02 | -2.4149E-02 | 4.8988E-03 | -4.4005E-04 |
| 9 | -5.0000E+00 | -1.0337E-01 | 1.4084E-01 | -2.6642E-01 | 3.5279E-01 | -3.4487E-01 | 2.3305E-01 | -1.0152E-01 | 2.5520E-02 | 2.8094E-03 |
| 10 | -1.9060E-01 | -1.0828E-01 | 6.2887E-02 | 1.0964E-02 | -2.4641E-01 | 5.1967E-01 | -5.6367E-01 | 3.5406E-01 | -1.2149E-01 | 1.7706E-02 |
| 11 | 6.3871E-01 | -1.9363E-02 | 5.8485E-02 | -1.5449E-01 | 2.9190E-01 | -3.9842E-01 | 3.5886E-01 | -1.9913E-01 | 6.1082E-02 | -7.7457E-03 |
| 12 | -5.0000E+00 | 1.2263E-02 | -6.0340E-02 | 2.9255E-01 | -7.4838E-01 | 1.1103E+00 | -1.1567E+00 | 6.9788E-01 | -2.3587E-01 | 3.4574E-02 |
| 13 | -7.5323E-01 | 3.8724E-02 | 2.1640E-02 | -3.9188E-01 | 1.2066E+00 | -1.9781E+00 | 1.9312E+00 | -1.1335E+00 | 3.6811E-01 | -5.0402E-02 |
| 14 | -5.0000E+00 | 1.4280E-01 | -3.7757E-01 | 5.7853E-01 | -5.5747E-01 | 3.6392E-01 | -1.6100E-01 | 4.6017E-02 | -7.5675E-03 | 5.3547E-04 |
| 15 | 2.0937E+00 | 1.1041E-01 | -4.1208E-01 | 5,8207E-01 | -5,6779E-01 | 3.8577E-01 | -1.7817E-01 | 5.3122E-02 | -9.2062E-03 | 7.0336E-04 |
| 16 | -4.9939E+00 | -5,1948E-02 | 9.8842E-03 | -1.4328E-03 | 6.9192E-04 | -4.6744E-04 | 1.5009E-04 | -2.4571E-05 | 1.9999E-06 | -6.4211E-08 |
| 17 | -2.0290E+00 | -8.7437E-02 | 4.6255E-02 | -1.6261E-02 | 4.1149E-03 | -7.8846E-04 | 1.1158E-04 | -1.0640E-05 | 5.9073E-07 | -1.4143E-08 |
| 18 | -3.1978E+00 | -4.8031E-02 | 1.2669E-02 | -1.9208E-03 | -6.3319E-05 | 1.0994E-04 | -2.6225E-05 | 3.1276E-06 | -1.9199E-07 | 4.8059E-09 |

(Table 28) Various data (zoom ratio 1.471, image height 4.000)

| (Table 28) Various data | | | |
|---|---|---|---|
| | Wide-angle | Intermediate | Telephoto |
| Focal length | 3.727 | 4.157 | 5.482 |
| F number | 1.752 | 1.851 | 2.153 |
| Half field of view | 65.008 | 50.989 | 35.509 |
| Total length of lens | 9.699 | 9.263 | 8.530 |
| d6 | 2.084 | 1.474 | 0.200 |
| d18 | 0.424 | 0.597 | 1.138 |

(Table 29) Data of zoom lens groups

(Table 29) Data of zoom lens groups

| Group | Initial surface | Focal length | Configuration length or lens | Movement amount of lens |
|---|---|---|---|---|
| 1 | 1 | -7.526 | 1.638 | -1.170 |
| 2 | 7 | 2.913 | 5.104 | 0.714 |

(Table 30, Magnifications of zoom lens groups

| Group | Initial surface | Wide-angle | Intermediate | Telephoto |
|---|---|---|---|---|
| 1 | 1 | 0.000 | 0.000 | 0.000 |
| 2 | 7 | -0.495 | -0.552 | -0.728 |

(Seventh embodiment)

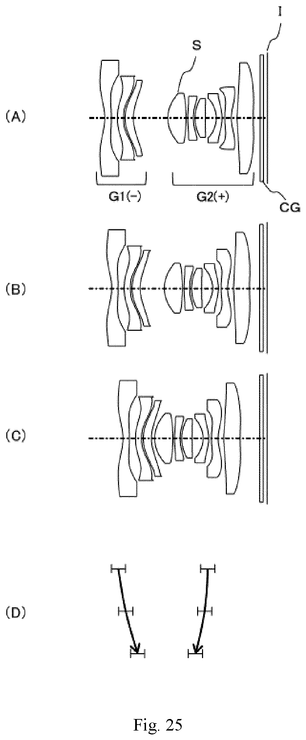

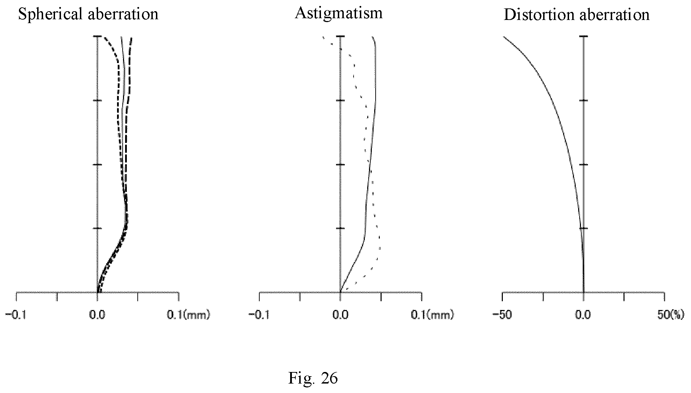

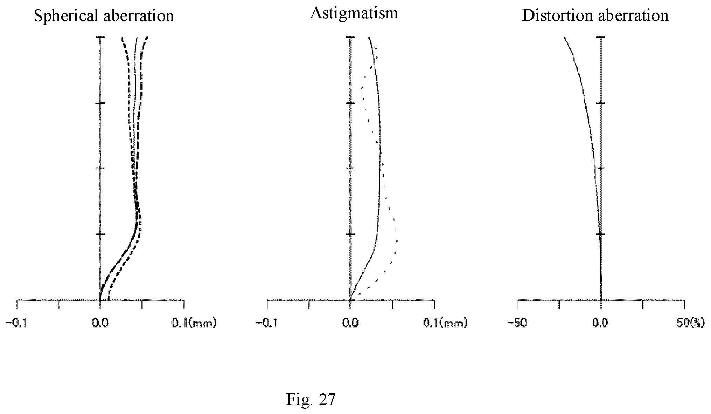

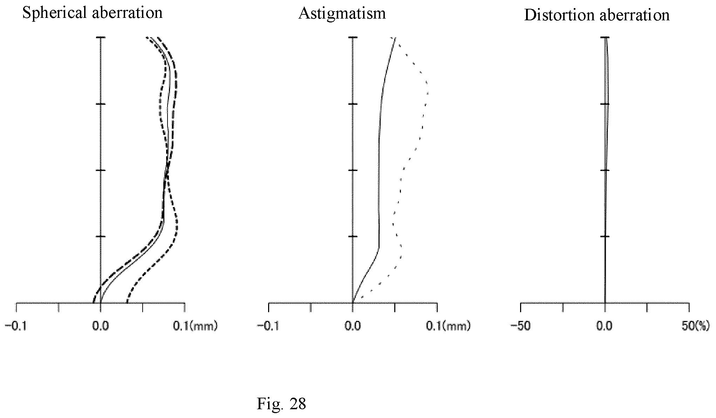

Fig. 25 is a lens layout view showing a wide-angle end state (Fig. 25 (A)), an intermediate focus position state (Fig. 25 (B)) and a telephoto end state (Fig. 25 (C)) of a zoom lens according to an embodiment (seventh embodiment) of this implementation and a diagram showing a change of a first lens group G1 and a second lens group G2 from the wide-angle end state to the telephoto end state (Fig. 25 (D)). Fig. 26 is a longitudinal aberration diagram of the wide-angle end state of he seventh embodiment Fig. 27 is a longitudinal aberration diagram of the intermediate focus position state of the seventh embodiment. Fig. 28 is a longitudinal aberration diagram of the telephoto end state of the seventh embodiment.

The zoom lens in the seventh embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.

In the seventh embodiment with the above configuration, in a process of zooming from the wide-angle end state to the telephoto end state, the first lens group G1 gradually moves toward an image side and the second lens group G2 gradually noves toward an object side That is, the first lens group G1 and the second lens group G2 move by different trajectories to reduce an interval. The aperture stop S moves integrally with the second lens group G2.

In the following, values of parameters of the seventh embodiment ire shown.

(Table 31) Surface data

(Table 31) Surface data

| Surface number | r | d | nd | vd | |
|---|---|---|---|---|---|
| 1* | -2.772 | 0.400 | 1.5131 | 37.65 | |

(continued)

| Surface number | r | d | nd | vd | |
|---|---|---|---|---|---|
| 2• | -8.673 | 0.373 | | | |
| 3* | 3.631 | 0.376 | 1.5439 | 55.93 | |
| 4* | 4.015 | 0.103 | | | |
| 5* | 2.479 | 0.500 | 1.6714 | 19.27 | |
| 6* | 2.227 | d6 | | | |
| 7* | 2.018 | 1.109 | 1.5439 | 55.93 | (Aperture stop) |
| 8* | -15.904 | 0.100 | | | |
| 9* | 3.802 | 0.350 | 1.6714 | 19.27 | |
| 10* | 2.160 | 0.111 | | | |
| 11* | 2.413 | 0.634 | 1.5439 | 55.93 | |
| 12* | -59.399 | 0.671 | | | |
| 13* | -1.487 | 0.350 | 1.6362 | 23.91 | |
| 14* | -2.080 | 0.167 | | | |
| 15* | 5.533 | 0.405 | 1.5439 | 55.93 | |
| 16* | 2.180 | 0.357 | | | |
| 17* | 5.266 | 0.987 | 1.6714 | 19.27 | |
| 18* | 9.240 | d18 | | | |
| 19 | ∞ | 0.210 | 1.5168 | 64.17 | |
| 20 | ∞ | 0.240 | | | |
| * represents aspheric surface | | | | | |

(Table 32) Aspheric data (in which an aspheric coefficient not shown is 0.00

(Table 32) Aspheric data (in which an aspheric coefficient not shown is 0.00)

| Surface number | k | A4 | A6 | A8 | A10 | A12 | A14 | A16 | A18 | A20 |
|---|---|---|---|---|---|---|---|---|---|---|
| 1 | -4.4120E+00 | 3.0564E-02 | -7.8221E-03 | 1.9303E-03 | -3.6845E-04 | 4.8637E-05 | -4.3207E-06 | 2.4741E-07 | -8.2201E-09 | 1.1978E-10 |
| 2 | -5.0000E+00 | 2.3480E-02 | -3.9119E-03 | 2.5908E-03 | -1.1499E-03 | 3.5938E-04 | -7.5181E-05 | 9.5066E-06 | -6.6604E-07 | 2.0649E-08 |
| 3 | -5.0000E+00 | 6.9482E-02 | -6.1052E-02 | 1.6617E-02 | 2.1321E-03 | -2.9062E-03 | 8.9371E-04 | -1.3669E-04 | 1.0722E-05 | -3.4541E-07 |
| 4 | -1.0619E-01 | 2.1256E-01 | -2.2282E-01 | 1.5540E-01 | -8.1140E-02 | 2.9014E-02 | -6.7536E-03 | 9.7620E-04 | -7.9492E-05 | 2.7814E-06 |
| 5 | -3.4686E+00 | 7.9007E-02 | -1.2446E-01 | 1.3175E-01 | -8.9402E-02 | 3.71332E-02 | -9.5172E-03 | 1.4399E-03 | -1.1862E-04 | 4.0969E-06 |
| 6 | -4.3033E+00 | -1.4597E-02 | -1.0956E-02 | 3.1083E-02 | -3.2085E-02 | 1.8121E-02 | -5.9378E-03 | 1.1233E-03 | -1.1417E-04 | 4.8523E-06 |
| 7 | -4.6510E-01 | 4.2210E-03 | 4.7109E-03 | -1.3181E-02 | 2.1037E-02 | -2.0650E-02 | 1.2206E-02 | -4.3168E-03 | 8.2491E-04 | -6.7921E-05 |
| 8 | 5.0000E+00 | -4.9600E-02 | 1.1156E-01 | -1.7595E-01 | 1.8981E-01 | -1.4323E-01 | 7.3189E-02 | -2.4106E-02 | 4.6076E-03 | -3.8815E-04 |
| 9 | -5.0000E+00 | -1.2527E-01 | 1.6063E-01 | -2.5543E-01 | 3.1927E-01 | -2.8536E-01 | 1.7738E-01 | -7.1656E-02 | 1.6B40E-02 | -1.7414E-03 |
| 10 | -3.2813E-01 | -1.0730E-01 | 5.5279E-02 | 1.6402E-02 | -2.1767E-01 | 4.3457E-01 | -4.4676E-01 | 2.6593E-01 | -8.6686E-02 | 1.2075E-02 |
| 11 | 6.8160E-01 | -7.8102E-03 | 4.5330E-02 | -1.4331E-01 | 2.7337E-01 | -3.6132E-01 | 3.1233E-01 | -1.6547E-01 | 4.8072E-02 | -5.6946E-03 |
| 12 | -5.0000E+00 | 2,4076E-02 | -6.2421E-02 | 3.1157E-01 | -8.0404E-01 | 1.2643E+00 | -1.2590E+00 | 7.6552E-01 | -2.6052E-01 | 3.8304E-02 |
| 13 | -8.7741E-01 | 6.8761E-02 | -2.2900E-02 | -3.4950E-01 | 1.1743E+00 | -1.9327E+00 | 1.8502E+00 | -1.0507E+00 | 3.2605E-01 | -4.2071E-02 |
| 14 | -5.0000E+00 | 1.7053E-01 | -4.1969E-01 | 6.2982E-01 | -6.0701E-01 | 3.9590E-01 | -1.7366E-01 | 4.8804E-02 | -7.8427E-03 | 5.4105E-04 |
| 15 | -5,0997E-01 | 9.1717E-02 | -3.7769E-01 | 5.3805E-01 | -5.1526E-01 | 3.3672E-01 | -1.4736E-01 | 4.1214E-02 | -6,6571E-03 | 4.7206E-04 |
| 16 | -4.5647E+00 | -6.4245E-02 | 2.7459E-02 | -1.4514E-02 | 6.7780E-03 | -2.3546E-03 | 5.5160E-04 | -8.1433E-05 | 6.8084E-06 | -2,4575E-07 |
| 17 | -8.0204E-01 | -7.0008E-02 | 3.5753E-02 | -1.1290E-02 | 2.2911E-08 | -3.0681E-04 | 2.7177E-05 | -1.5460E-06 | 5.1632E-08 | -7.7795E-10 |
| 18 | -7.7198E-02 | -3.6538E-02 | 1.0535E-02 | -2.4010E-03 | 4.7974E-04 | -7.9561E-05 | 8.3859E-06 | -6.9767E-07 | 2.8861E-08 | -5.0630E-10 |

28

(Table 33) Various data (zoom ratio 10493, image height 4.000)

| (Table 33) Various data | | | |
|---|---|---|---|
| | Wide-angle | Intermediate | Telephoto |
| Focal length | 3.671 | 4.126 | 5.480 |
| F number | 1.753 | 1.859 | 2.172 |
| Half field of view | 65.015 | 50.984 | 35.497 |
| Total length of lens | 9.999 | 9.550 | 8.861 |
| d6 | 2.129 | 1.485 | 0.200 |
| d18 | 0.425 | 0.621 | 1.216 |

(Table 34) Data of zoom lens groups

(Table 34) Data of zoom lens group

| Group | Initial surface | Focal length | Contiguration length of lens | Movement amount of lens |
|---|---|---|---|---|
| 1 | 1 | -7.226 | 1.753 | -1.138 |
| 2 | 7 | 2.970 | 5.241 | 0.791 |

(Table 35) Magnifications of zoom lens groups

| Group | Initial surface | Wide-angle | Intermediate | Telephoto |
|---|---|---|---|---|
| 1 | 1 | 0.000 | 0.000 | 0.000 |
| 2 | 7 | -0.508 | -0.571 | -0.758 |

(Eighth e ibodiment)

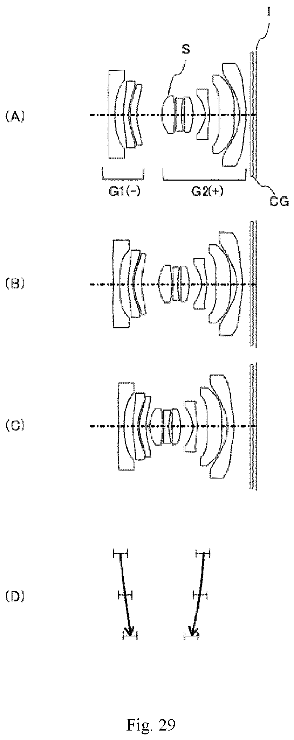

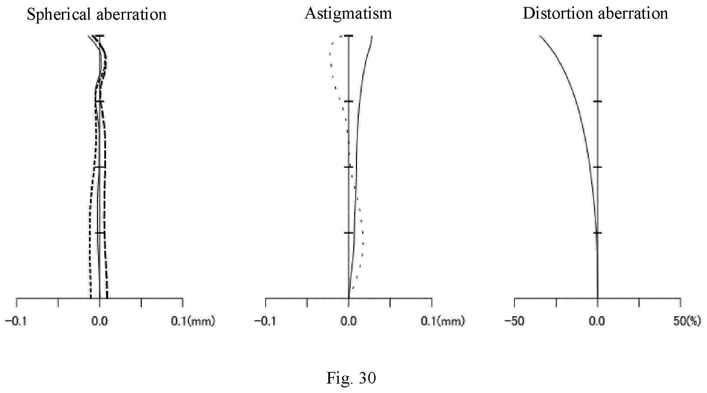

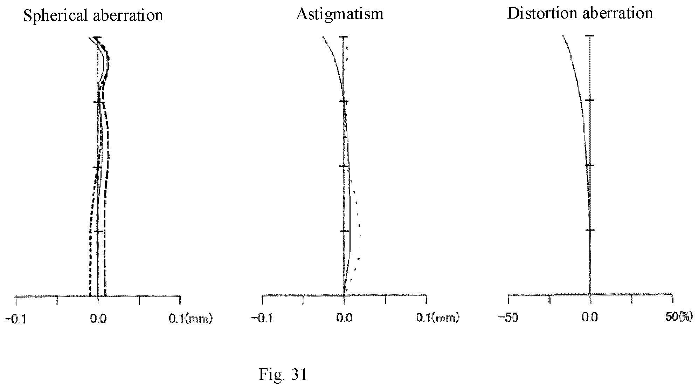

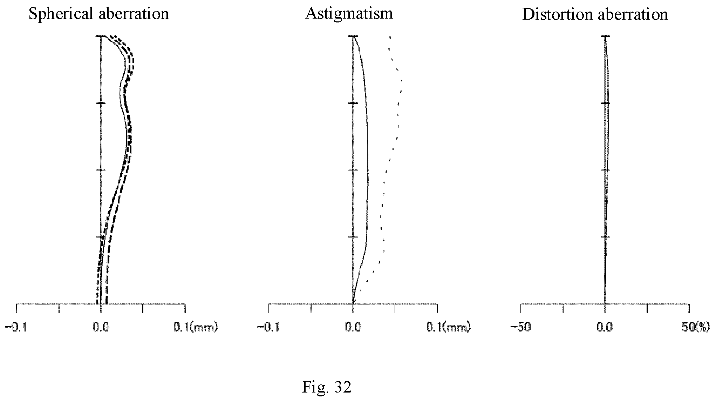

Fig. 29 is a lens layout view showing a wide-angle end state (Fig. 29 (A)), an intermediate focus position state (Fig. 29 (B)) and a telephoto end state (Fig. 29 (C)) of a zoom lens according to an embodiment (eighth embodiment) of this implementation and a diagram showing a change of a first lens group G1 and a second lens group G2 from the wide-angle end state to the telephoto end state (Fig. 29 (D)). Fig. 30 is a longitudinal aberration diagram of the wide-angle end state of he eighth embodiment. Fig. 31 is a longitudinal aberration diagram of the intermediate focus position state of the eighth embodiment. Fig. 32 is a longitudinal aberration diagram of the telephoto end state of the eighth embodiment.

The zoom lens in the eighth embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.

In the eighth embodiment with the above configuration, in a process of zooming from the wide-angle end state to the telephoto end state, the first lens group G1 gradually moves toward an image side and the second lens group G2 gradually moves toward an object side. That is, the first lens group G1 and the second lens group G2 move by different trajectories to reduce an interval therebetween The aperture stop S moves integrally with the second lens group G2.

In the following, values of parameters of the eighth embodiment are shown.

(Table 36) Surface data

(Table 36) Surface data

| Surface number | r | d | nd | vd | |
|---|---|---|---|---|---|
| 1* | -18.922 | 0.467 | 1.5445 | 55.97 | |
| 2* | 8.619 | 0.713 | | | |
| 3* | 6.182 | 0.400 | 1.5445 | 55.97 | |
| 4* | 3.937 | 0.100 | | | |
| 5* | 3.523 | 0.569 | 1.6714 | 19.27 | |
| 6* | 3.962 | d6 | | | |
| 7* | 2.316 | 1.078 | 1.5445 | 55.97 | (Aperture stop) |
| 8* | -5.707 | 0.100 | | | |
| 9* | 43.904 | 0.400 | 1.6714 | 19.27 | |
| 10* | 5.157 | 0.234 | | | |
| 11* | 40.315 | 0.698 | 1.5445 | 55.97 | |
| 12* | -4.697 | 1.000 | | | |
| 13* | -1.754 | 0.400 | 1.5781 | 36.36 | |
| 14* | -3.351 | 0.742 | | | |
| 15* | 12.789 | 1.230 | 1.6714 | 19.27 | |
| 16* | 16.780 | 0.484 | | | |
| 17* | -4.331 | 0.500 | 1.5445 | 55.97 | |
| 18* | -8.602 | d18 | | | |
| 19 | ∞ | 0.210 | 1.5168 | 64.17 | |
| 20 | ∞ | 0.240 | | | |
| * represents aspheric surface | | | | | |

(Table 37) Aspheric data (in which an aspheric coefficient not shown is 0.00

(Table 37) Aspheric data (in which an aspheric coefficient not shown is 0.00)

| Surface number | k | A4 | A6 | A8 | A10 | A12 | A14 | A16 | A18 | A20 |
|---|---|---|---|---|---|---|---|---|---|---|
| 1 | -4.9971E+00 | 5.1655E-03 | -2.4320E-04 | -4.36176E-06 | 3.2284E-07 | -2,7321E-10 | 5.9996E-12 | -1.2586E-13 | -7.8480E-15 | -7.5826E-16 |
| 2 | -4.9558E+00 | 2.8032E-03 | 9.5329E-04 | -8.3216E-05 | 4.0962E-06 | -1.0854E-09 | 1.8394E-11 | -1.1441E-13 | -1.3927E-15 | -1.9723E-17 |
| 3 | -5.0000E+00 | -6.3863E-03 | -4.2261E-05 | 3.3747E-05 | -9.3331E-07 | -2.0831E-10 | -3.0464E-12 | -1.1219E-13 | -1.4311E-15 | -1.96852E-17 |
| 4 | -1.0828E+00 | 1.4905E-03 | -1.1380E-03 | -8.1040E-05 | 1.0447E-05 | -9.4067E-10 | -1.7453E-10 | -1.1189E-13 | -1.5443E-15 | -1.9651E-17 |
| 5 | -3.4612E+00 | -3.8986E-04 | 6.3092E-05 | -7.6094E-05 | -5.2554E-06 | -5.6956E-09 | -2.8253E-10 | -1.0235E-13 | -1,3135E-15 | -1.678BE-17 |
| 6 | -4.5894E+00 | -7.0130E-03 | 3.4455E-04 | 7.4847E-05 | -1.7818E-05 | 5.4637E-11 | -1.1720E-11 | -1.2098E-13 | -1.5414E-15 | -1.9649E-17 |
| 7 | -1.4175E-01 | 1.5962E-03 | -3.1262E-04 | 3.2801E-04 | -2.0604E-04 | -2.3482E-07 | 8.6519E-09 | -1.2097E-13 | -1.5419E-15 | -1.9654E-17 |
| 8 | -4.9998E+00 | 9.3442E-03 | -1.9981E-03 | 4.6509E-05 | 8.1368E-05 | 1.6903E-07 | -3.4379E-09 | -1.2096E-13 | -1.5419E-15 | -1.99654E-17 |
| 9 | -4.9746E+00 | -2.6257E-02 | 3.9425E-03 | 2.4108E-03 | -1.9843E-04 | 5.9717E-07 | -1.7276E-08 | -1.2097E-13 | -1.5419E-15 | -1.9654E-17 |
| 10 | 4.4989E+00 | -2.3065E-02 | 4.6083E-03 | 1.2136E-03 | 1.1062E-03 | 1.2679E-06 | -3.5993E-08 | -1.2097E-13 | -1.5419E-15 | -1.9654E-17 |
| 11 | 5.0000E+00 | 9.9418E-03 | -1.1211E-02 | -3.7655E-04 | 2.7406E-04 | -3.3310E-08 | 3.3221E-10 | -1.2094E-13 | -1.5419E-15 | -1.9654E-17 |
| 12 | 1.1045E+00 | 1.4261E-03 | -6.0976E-03 | -8.7577E-04 | -8.8550E-05 | 9.7311E-09 | -3.9790E-10 | -1.2007E-13 | -1.5419E-15 | -1.9654E-17 |
| 13 | -2.6189E+00 | 3.7663E-03 | -2.6184E-03 | -1.6685E-03 | 2.4075E-04 | -6.9960E-10 | -8.1870E-12 | -1.0816E-13 | -1.5419E-15 | -1.9654E-17 |
| 14 | -4.9994E+00 | 2.1017E-02 | 3.7626E-04 | -1.9890E-04 | -5.7747E-06 | 1.3281E-09 | 1.6446E-11 | -1.2428E-13 | -1.5141E-15 | -1.9686E-17 |
| 15 | -4.9933E+00 | -3.5287E-02 | 1.3229E-02 | -8.0817E-03 | 3.5996E-03 | -1,0570E-03 | 2.0248E-04 | -2.4399E-05 | 1.67115E-06 | -4.9538E-08 |
| 16 | -4.0490E+00 | -4.5952E-02 | 1.6089E-02 | -5.9477E-03 | 1.7121E-03 | -3.4738E-04 | 4.6144E-05 | -3.7569E-06 | 1.6832E-07 | -3.1439E-09 |
| 17 | -8.1393E-01 | -5.8181E-02 | 3.2004E-02 | -8.2083E-03 | 1.2054E-03 | -1.1047E-04 | 6.6044E-06 | -2.5637E-01 | 5.9606E-09 | -6.3350E-11 |
| 18 | -1.4320E+00 | -2.3012E-02 | 1.5969E-02 | -4.2122E-03 | 6.3242E-04 | -5.9930E-05 | 3.6473E-06 | -1.3819E-07 | 2.9607E-09 | -2.7323E-11 |

(Table 38) Various data (zoom ratio 1.432, image height 5.120)

| (Table 38) Various data | | | |
|---|---|---|---|
| | Wide-angle | Intermediate | Telephoto |
| Focal length | 5.158 | 5.791 | 7.386 |
| F number | 2.400 | 2..557 | 2.951 |
| Half field of view | 56.723 | 46.462 | 34.561 |
| Total length of lens | 12.000 | 11.640 | 11.238 |
| d6 | 2.057 | 1.420 | 0.300 |
| d18 | 0.379 | 0.656 | 1.373 |

(Table 39) Data of zoom lens groups

(Table 39) Data of zoom lens groups

| Group | Initial surface | Focal length | Configuration length of lens | Movement amount of lens |
|---|---|---|---|---|
| 1 | 1 | -8.338 | 2.249 | -0.762 |
| 2 | 7 | 3.600 | 6.866 | 0.994 |

(Table 40, Magnifications of zoom lens groups

| Group | Initial surface | Wide-angle | Intermediate | Telephoto |
|---|---|---|---|---|
| 1 | 1 | 0.000 | 0.000 | 0.000 |
| 2 | 7 | -0.618 | -0.694 | -0.886 |

(Ninth e nbodiment)

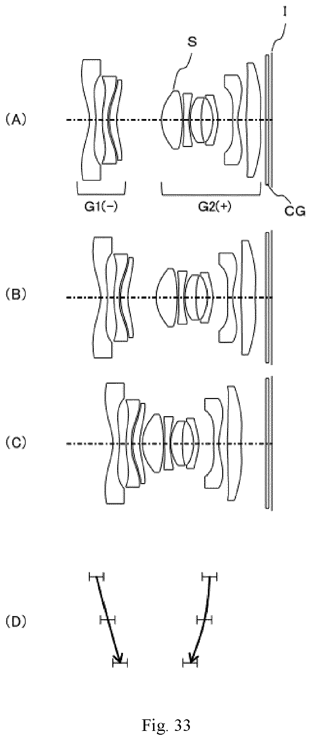

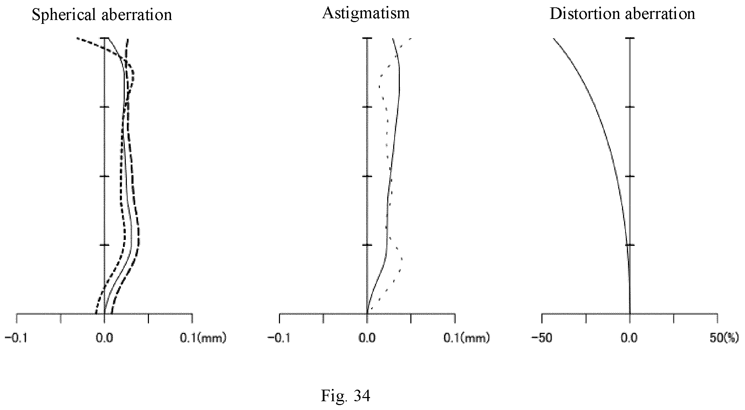

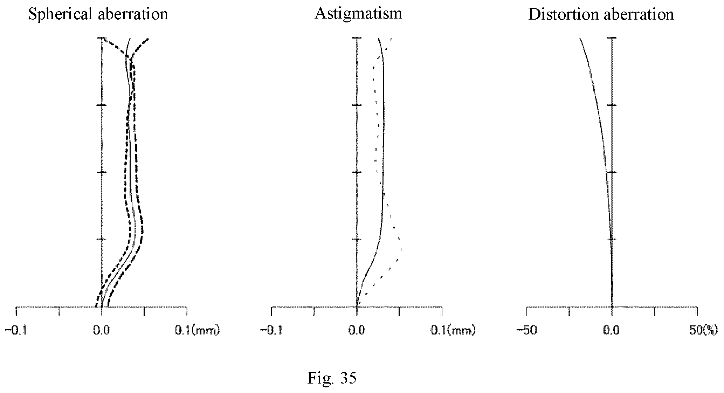

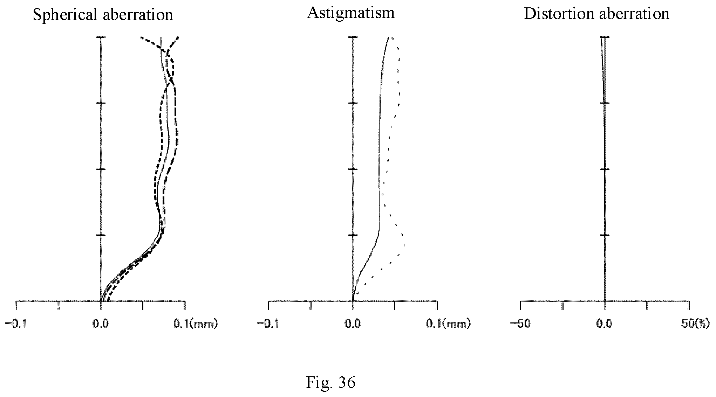

Fig. 33 is a lens layout view showing a wide-angle end state (Fig. 33 (A)), an intermediate focus position state (Fig. 33 (B)) and a telephoto end state (Fig. 33 (C)) of a zoom lens according to an embodiment (embodiment 9) of this implementation and a diagram showing a change of a first lens group G1 and a second lens group G2 from the wide-angle end state to the telephoto end state (Fig. 33 (D)). Fig. 34 is a longitudinal aberration diagram of the wide-angle end state of he ninth embodiment. Fig. 35 is a longitudinal aberration diagram of the intermediate focus position state of the ninth embodiment. Fig. 36 is a longitudinal aberration diagram of the telephoto end state of the ninth embodiment.

The zoom lens in the ninth embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.

In the ninth embodiment with the above configuration, in a process of zooming from the wide-angle end state to the telephoto end state, the first lens group G1 gradually moves toward an image side and the second lens group G2 gradually moves toward an object side. That is, the first lens group G1 and the second lens group G2 move by different trajectories to reduce an interval therebetween The aperture stop S moves integrally with the second lens group G2.

In the following, values of parameters of the ninth embodiment are shown.

(Table 41) Surface data

(Table 41) Surface data

| Surface number | r | d | nd | vd | |
|---|---|---|---|---|---|
| 1* | -3.245 | 0.500 | 1.5439 | 55.93 | |

(continued)

| Surface number | r | d | nd | vd | |
|---|---|---|---|---|---|
| 2* | -8.252 | 0.504 | | | |
| 3* | 10.241 | 0.40G | 1.5439 | 55.93 | |
| 4* | 8,848 | 0.100 | | | |
| 5* | 3.625 | 0.565 | 1.6714 | 19.27 | |
| 6* | 3.623 | d6 | | | |
| 7* | 2.884 | 1.613 | 1.5439 | 55.93 | (Aperture stop) |
| 8* | -10.931 | 0,100 | | | |
| 9* | 10,186 | 0,400 | 1.6714 | 19.27 | |
| 10* | 3.876 | 0.100 | | | |
| 11* | 3.534 | 0.865 | 1.5439 | 55.93 | |
| 12* | 16.530 | 0.861 | | | |
| 13* | -2.858 | 0.400 | 1.6397 | 23.49 | |
| 14* | -3.088 | 1.125 | | | |
| 15* | 37.497 | 0.400 | 1.5439 | 55.93 | |
| 16* | 3.804 | 0.652 | | | |
| 17* | 10.673 | 1.081 | 1.6714 | 19.27 | |
| 18* | 13.132 | d18 | | | |
| 19 | ∞ | 0.210 | 1.5168 | 64.17 | |
| 20 | ∞ | 0.240 | | | |
| * represents aspheric surface | | | | | |

(Table 42) Aspheric data ( n which an aspheric coefficient not shown is 0.00

(Table 42) Aspheric data (in which an aspheric coefficient not shown is 0.00)

| Surface. | k | A4 | A6 | A8 | A10 | A12 | A14 | A16 | A18 | A20 |
|---|---|---|---|---|---|---|---|---|---|---|
| 1 | -4.2190E+00 | 8.508BE-03 | -8.9983E-04 | 1.0548E-04 | -1.0799E-05 | 8.1526E-07 | -4.2634E-08 | 1.4578E-09 | -2.9152E-11 | 2.5713E-13 |
| 2 | -2.0666E+00 | 6.5561E-03 | -1.0162E-04 | 2.1385E-04 | -8.1333E-05 | 1.6612E-05 | -2.0651E-06 | 1.5673E-07 | -6.7334E-09 | 1.2670E-10 |
| 3 | -3.9364E+00 | 2.3040E-02 | -1.3664E-02 | 3.1852E-03 | -4,0545E-04 | 2.4177E-05 | 2.4548E-07 | -1.2953E-07 | 7.4213E-09 | -1.464BE-10 |
| 4 | 1.5244E+00 | 5.4382E-02 | -2.5313E-02 | 8.0110E-03 | -2.0265E-03 | 3.7150E-04 | -4.5640E-05 | 3.5244E-06 | -1.5416E-07 | 2.9124E-09 |
| 5 | -4.5645E+00 | 9.569BE-04 | -4.4104E-03 | 3,8794E-03 | -1.6576E-03 | 3.8552E-04 | -5.2291E-05 | 4.1506E-06 | -1.7970E-07 | 3.3009E-09 |
| 6 | -4.8089E+00 | -1.9909E-02 | 6.4168E-03 | -1.4558E-03 | 1.6089E-04 | 7.1960E-07 | -1.9071E-06 | 1.4586E-07 | -1.4898E-09 | -1.2416E-10 |
| 7 | -4.3324E-01 | 9.6510E-04 | 17885E-04 | -1.0050E-03 | 7.9193E-04 | -3.9601E-04 | 1.2247E-04 | -2.3299E-05 | 2.4723E-06 | -1.1563E-07 |
| 8 | -5.0000E+00 | -1.4510E-02 | 2.0744E-02 | -1.8514E-0,2 | 1.0272E-02 | -3.7099E-03 | 8.7053E-04 | -1.2831E-04 | 1.0798E-05 | -3.9721E-07 |
| 9 | -4.8650E+00 | -5.3986E-02 | 4.0099E-02 | -3.2064E-02 | 1.8387E-02 | -6.9829E-03 | 1.7401E-03 | -2.7301E-04 | 2.4430E-05 | -9.5058E-07 |
| 10 | -1.7732E-01 | -5.6983E-02 | 4.5202E-02 | -3.2686E-02 | 1.5297E-02 | -3.19951E-03 | 2.4722E-04 | 1.3825E-04 | -3.7006E-05 | 2.8864E-06 |
| 11 | 1.3504E+00 | -1.2450E-02 | 2.8339E-02 | -2.3823E-02 | 1.2429E-02 | -3.9849E-03 | 6.3734E-041 | 1.8235E-05 | -2.3846E-05 | 2.1453E-06 |
| 12 | 5.0000E+00 | 1.4697E-02 | -6.2871E-03 | 1.9321E-02 | -2.4596E-02 | 1.9479E-02 | -9.8256E-03 | 3.0362E-03 | -5.2528E-04 | 3,9001E-05 |
| 13 | -5.8721E-01 | 1.7752E-02 | -7.1160E-04 | -1.1956E-02 | 1.4084E-02 | -9.3504E-03 | 3.4211E-03 | -6.0109E-04 | 1.1659E-05 | 7.1108E-06 |
| 14 | -3.2780E+00 | 2.2425E-02 | -6.9111E-03 | 6.3612E-04 | 1.6271E-03 | -1.6147E-03 | 7.9506E-04 | -2.2608E-04 | 3.5510E-05 | -2.3332E-06 |
| 15 | 5.0000E+00 | 3.2502E-03 | -9.0137E-03 | 7.1512E-04 | 1.3022E-03 | -7.1303E-04 | 1.8652E-04 | -2.7601E-05 | 2.2032E-06 | -7.3259E-08 |
| 16 | -3.2373E+00 | -5.7303E-03 | -5.4879E-03 | 2.3183E-03 | -5.3048E-04 | 7.7991E-05 | -7.5352E-06 | 4.6011E-07 | -1.6000E-08 | 2.4015E-10 |
| 17 | 2.3405E+00 | -1.6468E-02 | 3.1815E-03 | -3.7979E-04 | 2.9112E-05 | -1.4029E-06 | 3.1605E-08 | 4.8906E-10 | -4.4493E-11 | 6.9763E-13 |
| 18 | -4 6842E-01 | -1.4528E-02 | 1.8 545E-03 | -1.8741E-04 | 1.3181E-05 | -3.4383E-07 | -2.5812E-08 | 2.5010E-09 | -7.9694E-11 | 9.0139E-13 |

(Table 43) Various data (zoom ratio 1.668, image height 5.120)

| (Table 43) Various data | | | |
|---|---|---|---|
|  | Wide-angle | Intermediate | Telephoto |
| Focal length | 5.025 | 5,954 | B.382 |
| F number | 1.753 | 1.919 | 2.350 |
| Half field of view | 61,012 | 46.491 | 31.701 |
| Total length of lens | 13.999 | 13.134 | 12.217 |
| d6 | 3,454 | 2.187 | 0.200 |
| d18 | 0.428 | 0.831 | 1.901 |

(Table 44) Data of zoom lens groups

(Table 44) Data of zoom lens groups

| Group | Initial surface | Focal length | Configuration length of lens | Movement amount of lens |
|---|---|---|---|---|
| 1 | 1 | -9.826 | 2.069 | -1.782 |
| 2 | 7 | 4.154 | 7.598 | 1.472 |

(Table 45 Magnifications of zoom lens groups

| Group | Initial surface | Wide-angle | Intermediate | Telephoto |
|---|---|---|---|---|
| 1 | 1 | 0.000 | 0.000 | 0.000 |
| 2 | 7 | -0.511 | -0.606 | -0.853 |

(Tenth embodiment)

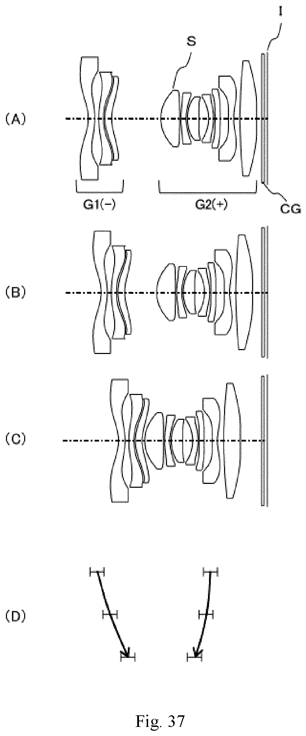

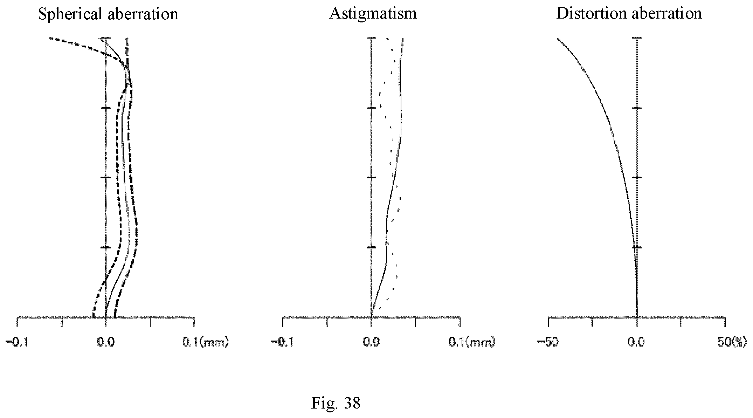

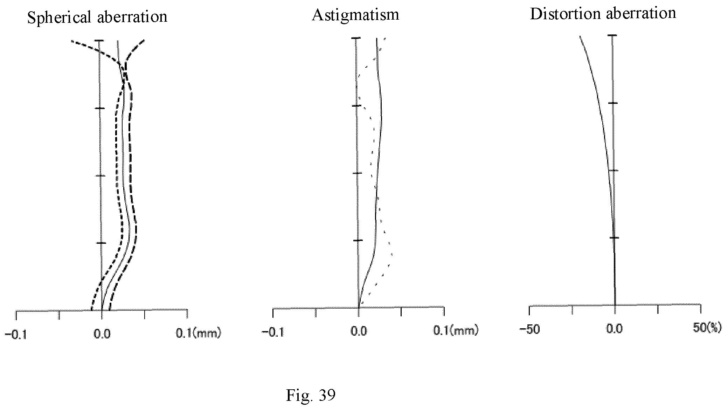

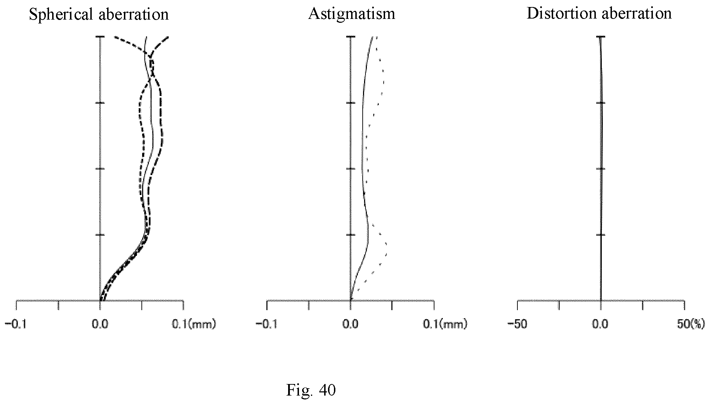

Fig. 37 is a ens layout view showing a wide-angle end state ( Fig. 37 (A)), an intermediate focus position state ( ig. 37 (B)) and telephoto end state ( Fig. 37 (C)) of a zoom lens according to an embodiment (tenth embodiment) of this implementation and a diagram showing a change of a first lens group G1 and a second lens group G2 from the wide-angle end state to the telephoto end state (Fig. 37 (D)). Fig. 38 is a longitudinal aberration diagram of the wide-angle end state of he tenth e nbodiment. Fig. 39 is a longitudinal aberration diagram of the intermediate focus position state of the tenth embodiment Fig. 40 is a longitudinal aberration diagram of the telephoto end state of the tenth embodiment.

The zoom lens in the tenth embodiment has the first lens group G1 with a negative refractive power and he second lens group G2 with a positive refractive power and an aperture stop S for adjusting a light quantity is arranged between the first lens group G1 and the second lens group G2. In addition, an optical filter CG including an infrared cut-off filter or the like is arranged between the second lens group G2 and an imaging position I.

In the tenth embodiment with the above configuration, in a process of zooming from the wide-angle end state to the telephoto end state, the first lens group G1 gradually moves toward an image side and the second lens group G2 gradually moves toward an object side. That is, the first lens group G1 and the second lens group G2 move by different trajectories to reduce an interval therebetween The aperture stop S moves integrally with the second lens group G2.

In the following, values of parameters of the tenth embodiment are shown.

(Table 46) Surface data

(Table 46) Surface data

| Surface number | r | d | nd | vd | |
|---|---|---|---|---|---|
| 1* | -2.954 | 0.500 | 1.5439 | 55.93 | |

(continued)

| Surface number | r | d | nd | vd | |
|---|---|---|---|---|---|
| 2* | -5.813 | 0.306 | | | |
| 3* | 8.128 | 0.412 | 1.5439 | 55.93 | |
| 4* | 8.381 | 0.100 | | | |
| 5* | 3.141 | 0.522 | 1.6714 | 19.27 | |
| 6* | 2.943 | d6 | | | |
| 7* | 2.776 | 1.457 | 1.5439 | 55.93 | (Aperture stop) |
| 8* | -59.779 | 0.100 | | | |
| 9* | 4.723 | 0.400 | 1.6714 | 19.27 | |
| 10* | 2.946 | 0.120 | | | |
| 11* | 3.445 | 0,886 | 1.5439 | 55.93 | |
| 12% | -497.957 | 0.779 | | | |
| 13* | -2.637 | 0.400 | 1.6714 | 19.27 | |
| 14* | -3.521 | 0.100 | | | |
| 15* | -32.437 | 0.400 | 1.5439 | 55.93 | |
| 16* | -32.241 | 0.652 | | | |
| 17* | -90.402 | 0.400 | 1.5439 | 55.93 | |
| 18* | 4.051 | 0.480 | | | |
| 19* | 13.226 | 1.305 | 1.6714 | 19.27 | |
| 20* | 57.050 | d20 | | | |
| 21 | ∞ | 0.210 | 1.5168 | 64.17 | |
| 22 | ∞ | 0.240 | | | |
| * represents aspheric surface | | | | | |

(Table 47) Aspheric data ( in which an aspheric coefficient not shown is 0.00

(Table 47) Aspheric data (in which an aspheric coefficient not shown is 0.00)

| number | k | A4 | A6 | A8 | A10 | A12 | A14 | A16 | A18 | A20 |
|---|---|---|---|---|---|---|---|---|---|---|
| 1 | -3.8500E+00 | 8.4075E-03 | -6.4845E-04 | 5.4869E-05 | -4.1457E-06 | 2.0920E-07 | -6.316BE-09 | 9.5711E-11 | -1.944,5E-13 | -86559E-15 |
| 2 | -5.0000E+00 | -1.2607E-03 | 3.4999E-03 | -7.9982E-04 | 1.1454E-04 | -1.0032E-05 | 4.5858E-07 | 1143-09; -2. | -6.7661E-10 | 2.1257E-11 |
| 3 | -5.0000E+00 | 2.3556E-02 | -1.4780E-02 | 3.9593E-03 | -6.3848E-04 | 6.5648E-05 | -4.3930E-06 | 1.8773E-07 | -4.6680E-09 | 5.0759E-11 |
| 4 | -6.1128E-01 | 6.1865E-02 | -2.7875E-02 | 7.9411E-03 | -1.7474E-03 | 2.8641E-04 | -3.2914E-05 | 2.4606E-06 | -1.0610E-07 | 1.9834E-09 |
| 5 | -4,8142E+00 | -1.5044E-03 | 9, 6712E-04 | 2.1433E-03 | -1.2056E-03 | 3.2078E-04 | -4.7841E-05 | 4.1326E-06 | -1.9437E-07 | 3.8639E-9 |
| 6 | -4.9674E+00 | -2.1926E-02 | 9.2777E-03 | -2.6984E-03 | 4.4707E-04 | -3.5445E-05 | 1.7541E-08 | 2.2141E-07 | -1.6129E-08 | 3.8372E-10 |
| 7 | -4.0843E-01 | 1.9584E-03 | 5.2608E-05 | 4.6266E-04 | -6.0770E-04 | 4.1665E-04 | -1.6625E-04 | 3.7982E-05 | -4.6398E-06 | 2.254BE-07 |
| 8 | -5.0000E+00 | -1.1296E-02 | 2.4241E-02 | -2.2864E-02 | 1.3263E-02 | -5.1070E-03 | 1.2905E-03 | -2.0854E-04 | 1.9006E-05 | -7.6685E-07 |
| 9 | -3.9657E+00 | -4.4177E-02 | 3.8696E-02 | -3.3332E-02 | 1.9544E-02 | -7.7360E-03 | 2.0618E-03 | -3.5312E-04 | 3.5252E-05 | -1.5620E-06 |
| 10 | -4.8924E-01 | -4.6488E-02 | 3.3959E-02 | -2.2250E-02 | 6.1625E-03 | 6.1939E-04 | -1.2579E-03 | 4.5148E-04 | -7.3650E-05 | 4.12541-06 |
| 11 | 1.6063E+00 | -4.8603E-03 | 1.7349E-02 | -9.8667E-03 | -3.3219E-04 | 3.9332E-03 | -2.6471E-03 | 8.9645E-04 | -1.6079E-04 | 1.2223E-05 |
| 12 | 5.0000E+00 | 1.0051E-02 | -3.7752E-03 | 1.4774E-02 | -1.7866E-02 | 1.3816E-02 | -6.8162E-03 | 2.0453E-03 | -3.4277E-04 | 2.4615E-05 |
| 13 | -3.5215E-01 | 1.2596E-02 | 1.4096E-03 | -7.5610E-03 | 9.8428E-03 | -7.3529E-03 | 2.7954E-03 | -4.2108E-04 | -3.3764E-05 | 1.2685E-05 |
| 14 | -4.2319E+00 | 3.2747E-02 | -4.7999E-02 | 5-4702E-02 | -3.9915E-02 | 1.9915E-02 | -6,7959E-03 | 1.5339E-03 | -2.0675E-04 | 1.2578E-05 |
| 15 | 5.0000E+00 | 3,7736E-02 | -7.2715E-02 | 5.6541E-02 | -2.7452E-02 | 8.1101E-03 | -1.1822E-03 | -1.0820E-05 | 2.7273E-05 | -2.6699E-06 |
| 16 | 5.0000E+00 | 2.9087E-02 | 3.4955E-02 | 1.5834E-02 | -3.4019E-03 | -1.6899E-04 | 3.2323E-04 | -8.5157E-05 | 9.8130E-06 | -4.3418E-07 |
| 17 | -5.0000E+00 | -1.9195E-03 | -1.5776E-02 | 4.6809E-03 | -5.6684E-04 | -8.9766E-05 | 5.0698E-05 | -8,6596E-06 | 6.8573E-07 | -2.1257E-08 |
| 18 | -4.6666E+00 | -1.4382E-02 | -2.9141E-03 | 1.8333E-03 | -4.1224E-04 | 7.4569E-05 | -7.6293E-06 | 4.9376E-07 | -1.8603E-08 | 3.1488E-10 |
| 19 | -5.0000E+00 | -1.3224E-02 | 3.7048E-03 | -6.2081E-04 | 6.6870E-05 | -4,7708E-06 | 2.2949E-07 | -7.4231E-09 | 1.5062E-10 | -1.4595E-12 |
| 20 | 5.0000E+00 | -9.9393E-03 | 1.2854E-03 | -1.7010E-04 | 2.8118E-05 | -3.6112E-06 | 2.8892E-07 | -1.3545E-08 | 3.4115E-10 | -3.5625E-12 |

37

(Table 48) Various data (zoom ratio 1.607, image height 5.120)

| (Table 48) Various data | | | |
|---|---|---|---|
| | Wide-angle | Intermediate | Telephoto |
| Focal length | 5.161 | 5.989 | 8.294 |
| F number | 1.753 | 1.884 | 2.245 |
| Half field of view | 61.005 | 46.492 | 31.706 |
| Total length of lens | 13.999 | 12.995 | 11.611 |
| d6 | 3.828 | 2.501 | 0.200 |
| d20 | 0.401 | 0.725 | 1.641 |

(Table 49) Data of zoom lens groups

(Table 49) Data of zoom lens groups

| Group | Initial furface | Focal length | Configuration length of lens | Movement amount of lens |
|---|---|---|---|---|
| l | t | -11.364 | 1.840 | -2.388 |
| 2 | 7 | 4.362 | 7.480 | 1.240 |

(Table 50) Magnifications of zoom lens groups

| Group | Initial surface | Wide-angle | Intermediate | Telephoto |
|---|---|---|---|---|
| 1 | 1 | 0.000 | 0.000 | 0.000 |
| 2 | 7 | -0.454 | -0.527 | -0.730 |

In the above description, as this implementation, the zoom lenses in the first to tenth embodiment have been described. In addition, it should be noted that the magnifications of the zoom lens group in he first to tenth embodiments are calculated based on a case that an object distance is infinite. Here, the correspondence between conditional expressions and the embodiments in this implementation will be described. The conditional expression are as follows.

$$\text{Conditional expression (1)} = OAL2/OALw$$

in which

OAL2: an axial length of a second lens group from an object side to an image side and

OALw: an axial length of a first lens group at a wide-angle end from an object side to an image plane.

$$\text{Conditional expression (2)} = f1/f2$$

in which

f1: a focal length of a first lens group and
f2: a focal length of a second lens group.

$$\text{Conditional expression (3)} = f2/ \sqrt{} (fw \langle ft)$$

in which

f2: a focal length of a second lens group
fw: a focal length at a wide-angle end; and
ft: a focal length at a telephoto end.

$$\text{Conditional expression (4)}=L1R1/L1R2,$$

in which

L1R1: a radius of curvature of an object-side surface of a lens closest to an object side; and
L1R2: a radius of curvature of an image-side surface of the lens closest to the object side.

$$\text{Conditional expression (5)}=OALw/\sqrt{(fw \times ft)},$$

in which

OALw: an axial length of a first lens group at a wide-angle end from an object side to an image plane;
fw: a focal length at the wide-angle end; and
ft: a focal length at a telephoto end.

$$\text{Conditional expression (6)}=m1/m2,$$

in which

m1: a movement amount of a first lens group toward an object side when zooming from a wide-angle end to a telephoto end; and
m2: a movement amount of a second lens group toward the object side when zooming from the wide-angle end to the telephoto end.

$$\text{Conditional expression (7)}=(OALt-m2)/\sqrt{(fw \times ft)},$$

in which

OALt: an axial length of a first lens group at a telephoto end from an object side to an image plane;
m2: a movement amount of a second lens group toward the object side when zooming from a wide-angle end to the telephoto end;
fw: a focal length at the wide-angle end; and
ft: a focal length at the telephoto end.

Table 51 shows the values and parameters of the above conditional expressions in the first to tenth embodiments.

(Table 51) Corresponding values of conditional expressions

(Table 51) Corresponding values of conditional expressions

| | 1st embodiment | 2nd embodiment | 3rd embodiment | 4th embodiment | 5th embodiment | 6th embodiment | 7th embodiment | 8th embodiment | 9th embodiment | 10th embodiment |
|---|---|---|---|---|---|---|---|---|---|---|
| Conditional | 0.498 | 0.516 | 0.522 | 0.522 | 0.523 | 0,526 | 0.524 | 0.572 | 0.543 | 0.534 |
| | -2.014 | -2.135 | -2.254 | -2.320 | -2.329 | -2.583 | -2.433 | -2,316 | -2.365 | -2.605 |
| Conditional | 0.587 | 0.599 | 0.600 | 0.624 | 0.651 | 0.645 | 0.662 | 0.583 | 0.640 | 0.667 |
| Condicional | -4.057 | -2.919 | -0.509 | -0.298 | 0.238 | 0.272 | 0.320 | -2.195 | 0.393 | 0.508 |
| Conditional | 2.150 | 2.205 | 2.212 | 2.256 | 2.270 | 2.146 | 2.229 | 1.944 | 2.157 | 2.140 |
| Conditional | -0,349 | -0.570 | -0.724 | -0.984 | -1.107 | -1.638 | -1.439 | -0.767 | -1.210 | -1.926 |
| Conditional | 1.841 | 1.873 | 1.868 | 1.873 | 1.858 | 1.729 | 1.799 | 1.660 | 1.656 | 1.585 |
| OAL2 | 4.727 | 5.053 | 5.112 | 5.219 | 5.225 | 5.104 | 5.241 | 6,866 | 7.598 | 7.480 |
| OALw | 9.500 | 9.800 | 9.800 | 10.000 | 10.000 | 9.699 | 9.999 | 12.000 | 13.999 | 13.999 |
| f1 | -5.228 | -5.684 | -5.990 | -6.414 | -6.680 | -7.526 | -7.226 | -8.339 | -9.826 | -11.364 |
| f2 | 2.596 | 2.662 | 2.658 | 2,764 | 2.869 | 2.913 | 2.970 | 3.600 | 4.154 | 4.362 |
| fw | 3.544 | 3.585 | 3.590 | 3.589 | 3.582 | 3.727 | 3.671 | 5.158 | 5.025 | 5.161 |
| ft | 5.510 | 5.510 | 5.469 | 5.473 | 5.418 | 5.482 | 5.480 | 7.386 | 8.382 | 8.294 |
| L1R1 | -18.782 | -15.048 | -6.544 | -5.798 | -3.839 | -2.897 | -2.772 | -18.922 | -3.245 | -2.954 |
| L1R2 | 4.629 | 5.156 | 12.856 | 19.458 | -16.153 | -10.666 | -8.673 | 8.619 | -8.252 | -5.813 |
| m1 | -0.353 | -0.535 | -0.640 | -0.844 | -0.953 | -1.170 | -1.138 | -0.762 | -1.782 | -2.388 |
| m2 | 1.013 | 0.939 | 0.884 | 0.857 | 0.861 | 0.714 | 0.791 | 0.994 | 1.472 | 1.240 |
| OALt | 9.147 | 9.265 | 9.160 | 9.156 | 9.047 | 8.530 | 8.861 | 11.238 | 12.217 | 11.611 |

As shown in Table 51, for the first to tenth embodiments, conditional expression (1) satisfies a following range:

In addition, conditional expression (2) satisfies a following range:

$$-5.00 \leq f1/f2 \leq -1.30.$$

In addition, conditional expression (3) satisfies a following range:

$$0.10 \leq f2/\sqrt{(fw \times ft)} \leq 0.90.$$

In addition, conditional expression (4) satisfies a following range:

$$-10.00 \leq L1R1/L1R2 \leq 0.90.$$

In addition, conditional expression (5) satisfies a following range:

$$1.20 \leq OALw/\sqrt{(fw \times ft)} \leq 3.00.$$

In addition, conditional expression (6) satisfies a following range:

$$-2.00 \leq m1/m2 \leq -0.20.$$

In addition, conditional expression (7) satisfies a following range:

$$0.50 \leq (OALt-m2)/\sqrt{(fw \times ft)} \leq 5.00.$$

With these conditional expressions satisfying the above ranges, it is possible to provide a zoom lens and a photographing device which are small and thin as a whole and may photograph with a wide angle, a high brightness and a high performance. In addition, in a case that at least any one of conditional expressions (1) to (4) satisfies the above range, an effect of a small and thin zoom lens may be obtained compared with the existing zoom lens. On the other hand, on the premise that any one of conditional expressions (1) to (4) satisfies the above range, in a case that at least one of conditional expressions (5) to (7) is satisfied, an effect of a smaller and thinner zoom lens may be obtained.

Moreover, in addition to the above embodiments, experiments are conducted repeatedly, and as a result, it is confirmed that better effects may be obtained in the following ranges.

For conditional expression (1),

$$0.42 \leq OAL2/OALw \leq 0.70.$$

More preferably,

$$0.46 \leq OAL2/OALw \leq 0.60.$$

For conditional expression (2),

$$-4.00 \leq f1/f2 \leq -1.60.$$

More preferably,

$$-3.00 \leq f1/f2 \leq -1.80.$$

For conditional expression (3),

$$0.30 \leq f2/\sqrt{(fw \times ft)} \leq 0.80.$$

More preferably,

$$0.50 \leq f2/\sqrt{(fw \times ft)} \leq 0.70.$$

For conditional expression (4),

$$-7.00 \leq L1R1/L1R2 \leq 0.80.$$

More preferably,

$$-5.00 \leq L1R1/L1R2 \leq 0.70.$$

For conditional expression (5),

$$1.50 \leq OALw/\sqrt{(fw \times ft)} \leq 2.70.$$

More preferably,

$$1.80 \leq OALw/\sqrt{(fw \times ft)} \leq 2.40.$$

For conditional expression (6),

$$-1.97 \leq m1/m2 \leq -0.25.$$

More preferably,

$$-1.94 \leq m1/m2 \leq -0.30.$$

For conditional expression (7),

$$1.00 \leq (OALt-m2)/\sqrt{(fw \times ft)} \leq 3.50.$$

More preferably,

$$1.50 \leq (OALt-m2)/\sqrt{(fw \times ft)} \leq 2.00.$$

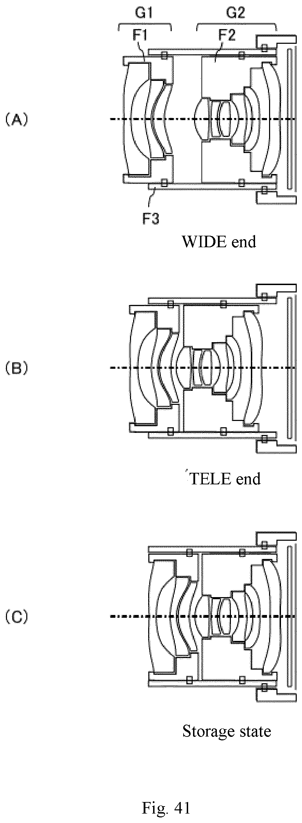

Next, a structure of a lens barrel supporting the first lens group G1 and the second lens group G2 will be described. Fig. 41 is a view showing the lens barrel in a wide-angle end state (Fig. 41 (A)), a telephoto end state (Fig. 41 (B)) and a storage state (Fig. 41 (C)). As shown in the view, the first lens group G1 is supported on a first frame F1, and the second lens group G2 is supported on a second frame F2. The first frame F1 and the second frame F2 are supported on a integral frame F3 in such a way that they advance and retreat independently in a direction of an optical axis. In the storage state, the first frame F1 moves to be closest to an image side relative to the integral frame F3, thus realizing a compact storage state as a whole.

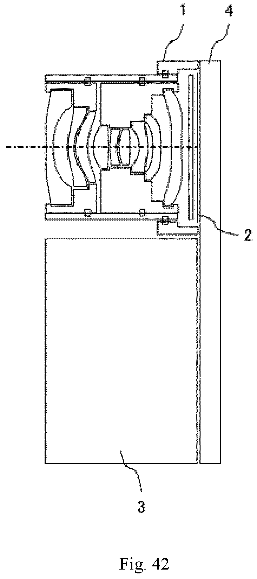

Fig. 42 is a schematic view showing a structure of a photographing device. The photographing device mainly includes: a lens barrel 1 which supports a lens group; a photographing element 2 which converts an optical image imaged by the lens group into an electrical signal; a computational processing component 3 which processes a photoelectrically converted image signal; and a liquid crystal panel 4 which displays processed image data as an image. In addition, as the photographing device having the zoom lens of this implementation, a digital still camera, a digital video camera, a surveillance camera, a smart phone, a PC, a tablet terminal, a driving recorder and the like are listed, which are particularly suitable for the photographing device that is expected to be thinned.

Description of reference numerals:

G1: first lens group
G2: second lens group
S: aperture stop
CG: optical filter
F1: first frame
F2: second frame
F3: integral frame
I: imaging position
1: lens barrel
2: photographing element
3: computational processing component
4: liquid crystal panel

**Claims**

1. A zoom lens, comprising a first lens group with a negative refractive power and a second lens group with a positive refractive power in sequence from an object side, wherein in a case of zooming from a wide-angle end to a telephoto end, the first lens group and the second lens group move by different trajectories to reduce an interval therebetween, and a following conditional expression is satisfied:

$$0.38 \leq OAL2/OALw \leq 0.80,$$

wherein

OAL2: an axial length of the second lens group from the object side to an image side; and
OALw: an axial length of the first lens group at the wide-angle end from the object side to an image plane.

2. A zoom lens, comprising a first lens group with a negative refractive power and a second lens group with a positive refractive power in sequence from an object side, wherein in a case of zooming from a wide-angle end to a telephoto end, the first lens group and the second lens group move by different trajectories to reduce an interval therebetween, and a following conditional expression is satisfied:

$$-5.00 \leq f1/f2 \leq -1.30,$$

wherein

fl: a focal length of the first lens group; and
f2: a focal length of the second lens group.

3. A zoom lens, comprising a first lens group with a negative refractive power and a second lens group with a positive refractive power in sequence from an object side, wherein in a case of zooming from a wide-angle end to a telephoto end, the first lens group and the second lens group move by different trajectories to reduce an interval therebetween, and a following conditional expression is satisfied:

$$0.10 \leq f2/\sqrt{(fw \times ft)} \leq 0.90,$$

wherein

f2: a focal length of the second lens group;
fw: a focal length at the wide-angle end; and
ft: a focal length at the telephoto end.

4. A zoom lens, comprising a first lens group with a negative refractive power and a second lens group with a positive refractive power in sequence from an object side, wherein in a case of zooming from a wide-angle end to a telephoto end, the first lens group and the second lens group move by different trajectories to reduce an interval therebetween, and a following conditional expression is satisfied:

$$-10.00 \leq L1R1/L1R2 \leq 0.90,$$

wherein

L1R1: a radius of curvature of an object-side surface of a lens closest to the object side; and
L1R2: a radius of curvature of an image-side surface of the lens closest to the object side.

5. The zoom lens according to any one of claims 1-4, wherein the first lens group moves to be closest to an image side at the telephoto end in a case of zooming.

6. The zoom lens according to any one of claims 1-4, wherein the zoom lens satisfies a following conditional expression:

$$1.20 \leq OALw/\sqrt{(fw \times ft)} \leq 3.00,$$

wherein

OALw: an axial length of the first lens group at the wide-angle end from the object side to an image plane;
fw: a focal length at the wide-angle end; and
ft: a focal length at the telephoto end.

7. The zoom lens according to any one of claims 1-4, wherein the zoom lens satisfies a following conditional expression:

$$-2.00 \leq m1/m2 \leq -0.20,$$

wherein

m1: a movement amount of the first lens group toward the object side in a case of zooming from the wide-angle end to the telephoto end; and
m2: a movement amount of the second lens group to the object side in a case of zooming from the wide-angle end to the telephoto end.

8. The zoom lens according to any one of claims 1-4, wherein in a case that no photographing is performed, the first lens group is moved to be closer to an image side than a position of the telephoto end, and is stored.

9. The zoom lens according to any one of claims 1-4, wherein the zoom lens satisfies a following conditional expression:

$$0.50 \leq (OALt-m2)/\sqrt{(fw \times ft)} \leq 5.00,$$

wherein

OALt: an axial length of the first lens group at the telephoto end from the object side to an image plane;
m2: a movement amount of the second lens group toward the object side in a case of zooming from the wide-angle end to the telephoto end;
fw: a focal length at the wide-angle end; and
ft: a focal length at the telephoto end.

10. A photographing device, comprising a zoom lens according to any one of claims 1-4, and a photographing element that converts a formed optical image into an electrical signal.

Fig. 1

Fig. 2

Spherical aberration

Astigmatism

Distortion aberration

−0.1    0.0    0.1(mm)    −0.1    0.0    0.1(mm)    −50    0.0    50(%)

Fig. 3

Fig. 4

(A)

(B)

(C)

(D)

Fig. 5

Fig. 6

Fig. 7

Spherical aberration

Astigmatism

Distortion aberration

Fig. 8

(A)

S

I

G1(−)  G2(+)  CG

(B)

(C)

(D)

Fig. 9

Fig. 10

Spherical aberration    Astigmatism    Distortion aberration

Fig. 11

Spherical aberration
Astigmatism
Distortion aberration

-0.1　0.0　0.1(mm)　　-0.1　0.0　0.1(mm)　　-50　0.0　50(%)

Fig. 12

EP 4 607 260 A1

(A)

S

I

G1(−)　　G2(+)

CG

(B)

(C)

(D)

Fig. 13

Spherical aberration     Astigmatism     Distortion aberration

-0.1     0.0     0.1(mm)     -0.1     0.0     0.1(mm)     -50     0.0     50(%)

Fig. 14

Fig. 15

Spherical aberration  Astigmatism  Distortion aberration

Fig. 16

(A)

G1(−)  G2(+)  S  I  CG

(B)

(C)

(D)

Fig. 17

Spherical aberration

Astigmatism

Distortion aberration

-0.1     0.0     0.1(mm)

-0.1     0.0     0.1(mm)

-50     0.0     50(%)

Fig. 18

Fig. 19

Spherical aberration    Astigmatism    Distortion aberration

-0.1    0.0    0.1(mm)    -0.1    0.0    0.1(mm)    -50    0.0    50(%)

Fig. 20

EP 4 607 260 A1

Fig. 21

Spherical aberration

Astigmatism

Distortion aberration

-0.1          0.0          0.1(mm)

-0.1          0.0          0.1(mm)

-50          0.0          50(%)

Fig. 22

Fig. 23

Spherical aberration          Astigmatism          Distortion aberration

−0.1    0.0    0.1(mm)      −0.1    0.0    0.1(mm)      −50    0.0    50(%)

Fig. 24

Fig. 25

Spherical aberration

Astigmatism

Distortion aberration

-0.1    0.0    0.1(mm)

-0.1    0.0    0.1(mm)

-50    0.0    50(%)

Fig. 26

Spherical aberration

Astigmatism

Distortion aberration

Fig. 27

Fig. 28

(A)

(B)

(C)

(D)

Fig. 29

Spherical aberration

Astigmatism

Distortion aberration

-0.1　　0.0　　0.1(mm)

-0.1　　0.0　　0.1(mm)

-50　　0.0　　50(%)

Fig. 30

Spherical aberration

Astigmatism

Distortion aberration

-0.1          0.0          0.1(mm)

-0.1          0.0          0.1(mm)

-50          0.0          50(%)

Fig. 31

Spherical aberration

Astigmatism

Distortion aberration

Fig. 32

(A)

S

I

G1(−)    G2(+)    CG

(B)

(C)

(D)

Fig. 33

Spherical aberration

Astigmatism

Distortion aberration

-0.1     0.0     0.1(mm)

-0.1     0.0     0.1(mm)

-50     0.0     50(%)

Fig. 34

Fig. 35

Fig. 36

Fig. 37

Spherical aberration          Astigmatism          Distortion aberration

-0.1    0.0    0.1(mm)    -0.1    0.0    0.1(mm)    -50    0.0    50(%)

Fig. 38

EP 4 607 260 A1

Fig. 39

Fig. 40

WIDE end

TELE end

Storage state

Fig. 41

Fig. 42

## INTERNATIONAL SEARCH REPORT

International application No.

**PCT/CN2022/126283**

| A. | CLASSIFICATION OF SUBJECT MATTER |
|---|---|

G02B 15/14(2006.01)i;G02B13/18(2006.01)i

According to International Patent Classification (IPC) or to both national classification and IPC

| B. | FIELDS SEARCHED |
|---|---|

Minimum documentation searched (classification system followed by classification symbols)

IPC:G02B15, G02B13

Documentation searched other than minimum documentation to the extent that such documents are included in the fields searched

Electronic data base consulted during the international search (name of data base and, where practicable, search terms used)

CNABS, CNTXT, ENTXTC, VEN, ENTXT: 变倍, 变焦, 第1, 第一, 第2, 第二, 正, 负, first, 1st, second, positive, negative

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2005275175 A (MIYOTA K. K.) 06 October 2005 (2005-10-06)<br>description, paragraphs 14-57, and figures 1-8 | 1-10 |
| X | CN 101000402 A (ZHEJIANG SUNNY OPTICS CO., LTD.) 18 July 2007 (2007-07-18)<br>description, pages 4-6, and figures 1 and 2 | 1-4, 6, 8-10 |
| X | JP 2017198934 A (KONICA MINOLTA, INC.) 02 November 2017 (2017-11-02)<br>description, paragraphs 69-154, and figures 1-30 | 1, 2, 5, 7-10 |
| L | CN 218383455 U (BEIJING XIAOMI MOBILE SOFTWARE CO., LTD.) 24 January 2023<br>(2023-01-24)<br>entire document | 1-10 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 June 2023** | **26 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/126283**

| Patent document cited in search report | | | Publication date (day/month/year) | Patent family member(s) | | | Publication date (day/month/year) |
|---|---|---|---|---|---|---|---|
| JP | 2005275175 | A | 06 October 2005 | None | | | |
| CN | 101000402 | A | 18 July 2007 | None | | | |
| JP | 2017198934 | A | 02 November 2017 | JP | 6666588 | B2 | 18 March 2020 |
| CN | 218383455 | U | 24 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014232217 A
- JP 2016170300 A